(19) Europäisches Patentamt / European Patent Office / Office européen des brevets

(11) **EP 4 455 203 A1**

(12) **EUROPEAN PATENT APPLICATION**

(43) Date of publication:
**30.10.2024  Bulletin 2024/44**

(21) Application number: **23170341.4**

(22) Date of filing: **27.04.2023**

(51) International Patent Classification (IPC):
$C08K\ 3/36$ (2006.01)   $B60C\ 1/00$ (2006.01)
$C08C\ 19/22$ (2006.01)   $C08C\ 19/24$ (2006.01)
$C08F\ 236/10$ (2006.01)

(52) Cooperative Patent Classification (CPC):
(C-Sets available)
**C08C 19/22; B60C 1/00; C08C 19/24;**
**C08F 236/10; C08K 3/36;** C08F 236/06     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Pirelli Tyre S.P.A.**
**20126 Milan (IT)**

(72) Inventors:
• **DALL'ABACO, Davide**
  **20126 Milan (IT)**
• **RUBINO, Lucia Rita**
  **20126 Milan (IT)**
• **HASHIZUME, Yuta**
  **Tokyo (JP)**
• **USHIO, Takaaki**
  **Tokyo (JP)**

(74) Representative: **PGA S.p.A.**
**Via Mascheroni, 31**
**20145 Milano (IT)**

(54)  **TYRE FOR VEHICLE WHEEL WITH SUPERIOR WEAR RESISTANCE AND GRIP**

(57)    The present invention relates to a tyre, for winter, all season or summer applications, characterized by a reduced wear and improved grip. Said tyre comprises a tyre component comprising a cross-linked elastomeric compound obtained from a cross-linkable elastomeric composition comprising a particular conjugated diene polymer (I).

FIG.2A

FIG.2B

(52) Cooperative Patent Classification (CPC): (Cont.)

C-Sets
**C08F 236/10, C08F 4/48;**
**C08K 3/36, C08L 15/00;**
C08F 236/06, C08F 212/08

**Description**

TECHNICAL FIELD

The present invention relates to a tyre for vehicle wheels, in particular, a tyre for cars. Particularly, the present invention relates to a tyre characterized by a reduced wear for winter, all season or summer applications, said tyre comprising a tyre component comprising a cross-linked elastomeric compound obtained from a cross-linkable elastomeric composition comprising a particular conjugated diene polymer.

STATE OF THE ART

Patent Documents US20050203251A1, US20090036567A1, JP11189616A, EP1457501A1 disclose rubber compositions comprising modified conjugated diene polymers obtained by reacting an active end of conjugated diene polymer with an alkoxysilane comprising an amino group and silica.

US2019023880A1 discloses a rubber composition comprising a modified conjugated diene polymer with a low vinyl content and a glass transition temperature (Tg) of at most -60 °C. US2021284827A1 discloses a rubber composition comprising blends of modified conjugated diene polymers, in particular blends of polymer A, having a Tg of at least -20.0 °C, and of polymer B, which is highly branched and has a Tg of at most -25 °C.

The polymers described above do not comprise polymer chains containing two segments having different microstructures and characterized by different Tg, rather they are conventional random styrene-butadiene modified copolymers.

According to the Applicant, there is still room for improvement of the physical properties of the known rubber compositions in terms of wear resistance and grip.

SUMMARY OF THE INVENTION

In the tyre sector, car manufacturers are demanding ever-higher performances. For eco-sustainability, cost-effectiveness and safety reasons, it is desirable to reduce tyre wear in order to extend tyre life, to minimize environmental pollution and to maintain tyre grip over time, grip that is negatively affected by tread wear thus typically resulting in a worsening of traction and breaking performance.

Tyre traction and braking at lower temperatures - typical of wintertime with snowy, icy roads - are in conflict with the behaviour on dry or wet surfaces at higher summer temperatures. Actually providing a tyre highly resistant to abrasion with excellent grip performance on snowy, icy, wet (winter, all season use) or on wet/dry road surfaces (summer application) is thus a particularly challenging goal.

The Applicant undertook investigations to reduce tread wear and in the meantime to achieve better tyre performance on wet and snowy ground, i.e. at lower temperatures as in winter or all season applications. Furthermore, for summer tyres, the Applicant wished to improve the grip on wet surfaces at higher temperatures meanwhile still seeking to reduce tread abrasion.

The Applicant has surprisingly found that a tyre with a tyre component comprising a cross-linked elastomeric compound obtained by cross-linking a cross-linkable elastomeric composition comprising a particular conjugated diene polymer (I) as defined below - said polymer appropriately selected with a lower Tg for winter or all season applications and a higher Tg for the summer ones - shows reduced wear and maintains or even improves grip performance in either applications. The increased abrasion resistance, without modification of other important properties of the final tyre, is predictive of performance retention over time and a longer tyre life.

Accordingly, the present invention relates to a vehicle wheel tyre comprising at least a tyre component comprising a cross-linked elastomeric compound obtained by cross-linking a cross-linkable elastomeric composition, wherein said cross-linkable elastomeric composition comprises at least a conjugated diene polymer (I) comprising bound conjugated diene monomer units and, optionally, bound aromatic vinyl monomer units, said conjugated diene polymer (I) comprising at least a first polymer segment and at least a second polymer segment.

Preferably, in the conjugated diene polymer (I), the calculated glass transition temperature of the first polymer segment ($Tg_{CALC1}$) is lower than the calculated glass transition temperature of the second polymer segment ($Tg_{CALC2}$), said calculated glass transition temperatures being determined according to the Gordon - Taylor equation.

Preferably, in the conjugated diene polymer (I), aromatic vinyl monomer units are present and preferably |X1 - X2| (wt%) is at most 5%, wherein X1 (wt%) is the amount of bound aromatic vinyl monomer unit in the first polymer segment, X2 (wt%) is the amount of bound aromatic vinyl monomer unit in the second polymer segment.

In a preferred embodiment, in the conjugated diene polymer (I), the $Tg_{CALC1}$ is lower than the $Tg_{CALC2}$, aromatic vinyl monomer units are present and |X1 - X2| (wt%) is at most 5%. Preferably, in the conjugated diene polymer (I), Y2 -Y1 (mol%) is from 15% to 50%, wherein Y1 (mol%) is the amount of vinyl unit in the bound conjugated diene monomer unit of the first polymer segment, Y2 (mol%) is the amount of vinyl unit in the bound conjugated diene monomer unit of the second polymer segment.

In a preferred embodiment, in the conjugated diene polymer (I), $Tg_{CALC1}$ is lower than $Tg_{CALC2}$, aromatic vinyl monomer units are present, |X1 - X2| (wt%) is at most 5% and Y2 -Y1 (mol%) is from 15% to 50%.

Preferably, in the conjugated diene polymer (I), said bound aromatic vinyl monomer units are present in both the polymer segments (i.e. X1>0 wt% and X2>0 wt%).

Preferably, the calculated glass transition temperature of the conjugated diene polymer (I) ($Tg_{CALC}$), calculated according to the Gordon- Taylor equation, is from -75.0°C to -30°C, more preferably from -72.0 °C to -40.0 °C.

Preferably, the conjugated diene polymer (I) has only one DSC glass transition temperature ($Tg_{DSC}$), measured according to the method of ISO 22768:2006 at a heating rate of 10 °C/min.

In one embodiment, in the conjugated diene polymer (I), the calculated glass transition temperature of the conjugated diene polymer (I) $Tg_{CALC}$ is from -72.0 °C to -40.0 °C, Y2 - Y1 (mol%) is from 15% to 50% and, if the aromatic vinyl monomer units are present, |X1 - X2| (wt%) is at most 5%.

In a preferred embodiment, in the conjugated diene polymer (I), $Tg_{CALC1}$ is lower than $Tg_{CALC2}$), aromatic vinyl monomer units are present in both the polymer segments, |X1 - X2| (wt%) is at most 5%, Y2 -Y1 (mol%) is from 15% to 50%, the conjugated diene polymer (I) has only one $Tg_{DSC}$ and has a $Tg_{CALC}$ from -75.0°C to -30°C, preferably from -72.0 °C to -40.0 °C.

In case, in the conjugated diene polymer (I), the aromatic vinyl monomer unit is styrene and the conjugated diene monomer unit is butadiene, the $Tg_{CALC}$ of the conjugated diene polymer (I), which is from -75.0°C to -30°C, preferably from -72.0 °C to -40.0 °C, can be calculated by using the approximated equation (1A):

$$Tg_{CALC} = \frac{- 5750 + 95X_{all} + 52\ Y_{all} - 0.52\ X_{all}\ Y_{all}}{56 - 0.2\ X_{all} - 0.1\ Y_{all}} \qquad (1A)$$

wherein $X_{all}$ (wt%) is the total amount of bound aromatic vinyl monomer unit in the conjugated diene polymer (I), and $Y_{all}$ (mol%) is the total amount of vinyl unit in the bound conjugated diene monomer unit of the conjugated diene polymer (I).

The Applicant noted that by providing the tyre of the invention as defined above, improved wear resistance together with better grip performances under different conditions have been surprisingly achieved.

DETAILED DESCRIPTION OF THE INVENTION

General Definitions

In the context of this description and the following claims, the term "phr" (parts per hundred of rubber) means parts by weight of a particular component per 100 parts by weight of the dry elastomeric polymer(s).

Unless otherwise stated, all percentages are expressed as percentages by weight.

The term "elastomeric composition" refers to a composition, comprising at least one diene elastomer polymer and one or more additives, which by mixing provides an elastomeric compound suitable for use in tyre components.

The components of the elastomeric composition are generally not all introduced simultaneously into the mixer but typically added sequentially. In particular, vulcanizing additives, such as the vulcanizing agent and optionally accelerators and retarders, are usually added at a stage downstream from the incorporation and processing of all other components. In the intermediate or final elastomeric compound, the individual components of the elastomeric composition do not always remain unaltered or individually traceable, as they may have been transformed, in whole or in part, by interaction with other components, heat and/or mechanical processing. The term "elastomeric composition" herein is intended to include the totality of all components that are added in the preparation of the elastomeric compound, irrespective of whether they are all actually present simultaneously, whether they are introduced sequentially, or whether they are subsequently traceable in the final elastomeric compound or tyre.

The term "cross-linkable elastomeric composition" refers to an elastomeric composition comprising at least an elastomeric diene polymer(s), a reinforcing filler and a vulcanizing agent.

The term "elastomeric compound" means the mixture obtainable by mixing and preferably heating, at specific pressure and temperature conditions, at least one elastomeric diene polymer with at least one of the additives commonly used in the preparation of compounds for tyres.

The term "vulcanized or cross-linked elastomeric compound" means the material obtainable by cross-linking or sulphur-curing an elastomeric compound.

The term "conjugated diene polymer" refers to a polymer or copolymer derived from the polymerisation of one or more monomers, at least one of which is a conjugated diene (conjugated diolefin).

The term " elastomeric polymer" means a natural or synthetic polymer which, after vulcanization, can be repeatedly stretched at room temperature to at least twice its original length and after removal of the tensile load returns substantially immediately and forcefully to its approximate original length (as defined in ASTM D1566-11 Standard terminology relating to Rubber).

The term "vulcanization" refers to the cross-linking reaction in a natural or synthetic rubber induced for example by a sulphur-based vulcanizing agent.

The term "raw or green" refers to a material, compound, component or tyre that has not yet been vulcanized.

The term "vulcanizing agent" refers to a cross-linking agent capable of transforming natural or synthetic rubber into an elastic and resistant material through the formation of a three-dimensional network of inter- and intra-molecular cross-links.

The term "vulcanization accelerator" refers to a chemical agent capable of decreasing the duration of the vulcanization process and/or operating temperature, such as TBBS, sulphenamides in general, thiazoles, dithiophosphates, dithiocarbamates, guanidines, as well as sulphur donors such as thiurams.

The term "vulcanizing activator" refers to a chemical agent that can further facilitate curing, causing it to take place at a shorter time and optionally lower temperature. An example of an activator is the stearic acid-zinc oxide system.

The term "vulcanizing retardant" refers to a chemical agent capable of delaying the start of the curing reaction and/or suppressing undesirable secondary reactions, e.g. N-(cyclohexylthio) phthalimide (CTP).

The term "curing system" refers to a system of chemical agents comprising at least one vulcanizing agent and optionally an accelerator agent, a retardant agent and a vulcanisation activating agent,

The term "reinforcing filler" refers to a reinforcing material typically used in the industry to improve the mechanical properties of tyre tyres, chosen preferably from carbon black, conventional silica, such as sand silica precipitated with strong acids, preferably amorphous, diatomaceous earth, calcium carbonate, titanium dioxide, talc, alumina, aluminosilicates, kaolin, silicate fibres and mixtures thereof.

The term "white filler" refers to a conventional reinforcing material used in the industry chosen from conventional silica and silicates, such as sepiolite, paligorskite also known as attapulgite, montmorillonite, alloisite and the like, optionally modified by acid treatment and/or derivatisation. Typically, white fillers have surface hydroxyl groups.

The term "mixing phase 1" refers to the step in the elastomer compound preparation process in which one or more additives may be incorporated by mixing and optionally heating, at specific pressure and temperature conditions, except for the vulcanizer which is fed in phase 2. The mixing phase 1 is also called the "non-production phase". In the preparation of a compound, there may be several "non-productive" mixing phases which may be referred to as 1a, 1b, etc.

The term "mixing phase 2" refers to the next step in the elastomeric compound preparation process in which the vulcanizing agent and, optionally, the other additives of the vulcanization package are introduced into the elastomeric compound obtained from phase 1, and mixed into the material, at a controlled temperature, generally at a compound temperature of less than 120 °C, so as to provide the vulcanizable elastomeric compound. The mixing phase 2 is also referred to as the "production phase". Each mixing phase may comprise several intermediate phases or sub-phases of processing, characterised by the momentary interruption of mixing to allow the addition of one or more ingredients but without intermediate dumping of the compound.

The term "modification" or "functionalisation" refers to a chain-end modification reaction between one end of a single polymer chain and one or more modifying agents.

The term "coupling" or "branching" corresponds to a chain end reaction between two and, respectively, more than two single polymer chain ends and one or more coupling agents. The chain-end modification reaction between more than two single polymer chain ends and a coupling agent results in polymers comprising three or more arms at the coupling point. In the present description, coupling functions and modifying functions may be present in the same agent that thus acts as coupling as well as modifying agent, the coupling functions providing the branching and the modifying functions modifying the properties of the polymer, for instance by making it more compatible with the filler and thus allowing the filler to be better distributed in the compound.

The term "modification rate" refers to the weight content ratio, expressed in %, of the modified conjugated diene polymer component having a modifying functional group in the polymer relative to the total amount of the conjugated diene polymer mixture.

The term "degree of branching" refers to the number of polymer arms/chains at the coupling point.

A "random" (or statistical) polymer, as defined here, includes two or more types of monomers that are polymerised in a non-regular or non-coherent manner, i.e. the sequence of monomers within the polymer chain follows a statistical rule.

A "block copolymer", as defined herein, essentially consists of two types of monomers that are polymerised in a regular or coherent manner, thus forming two or more homopolymer subunits that are connected by covalent bonds.

The term "segment or polymer segment" herein refers to a portion of the conjugated diene polymer (I) composed of conjugated diene monomer units and aromatic vinyl monomer units, or composed of conjugated diene monomer units only.

The term "polymer segment ratio in the conjugated diene polymer (I)" means the average weight fraction of each polymer segment relative to the entire conjugated diene polymer (I). The term "bound conjugated diene" herein refers to the conjugated diene monomer unit which is incorporated into the conjugated diene polymer (I) by polymerization.

The term "amount of bound aromatic vinyl monomer unit" herein refers to the wt% of bound aromatic vinyl monomer units with respect to a segment weight or the conjugated diene polymer (I) weight.

The terms "amount of vinyl unit" herein refers to the value of the molar fraction (mol%) of 1, 2-vinyl units with respect to the bound conjugated diene monomer units contained in the conjugated diene polymer (I) ($Y_{all}$) or in a segment thereof (Y1, Y2).

The term "microstructure" herein refers to the composition of a conjugated diene polymer composed conjugated diene units and, optionally, of aromatic vinyl units.

The term "consisting essentially of" means that additional specific components may be present, i.e. those that do not materially influence the essential characteristics of the polymer compound or elastomer composition in question.

DETAILED DESCRIPTION OF THE INVENTION

The tyre according to the invention and the cross-linkable elastomeric composition used to prepare one or more of the tyre components may have one or more of the following preferred characteristics, taken in isolation or in any desired combination with each other. Numerical ranges described as preferable ranges may be replaced with numerical ranges obtained by arbitrarily combining each value described as the upper limit and each value described as the lower limit, even when the combination is not specifically mentioned. The tyre of the invention comprises a tyre component comprising a cross-linked elastomeric compound obtained by cross-linking a cross-linkable elastomeric composition as described below. Preferably said tyre component consists essentially of a cross-linked elastomeric compound obtained by cross-linking the following cross-linkable elastomeric composition.

The present cross-linkable elastomeric composition comprises at least:

100 phr of one or more elastomeric polymer(s), of which at least 20 phr of at least a conjugated diene polymer (I) as defined below,
at least 10 phr of a reinforcing filler, and
at least 0.1 phr of a vulcanizing agent.

The cross-linkable elastomeric composition preferably comprises at least 30 phr or 40 phr, more preferably at least 50 phr or 60 phr or 70 phr, even more preferably at least 80 phr or 90 phr of one or more conjugated diene polymer(s) (I). In a preferred embodiment, the cross-linkable elastomeric composition comprises 100 phr of conjugated diene polymer(s) (I) as the only elastomeric polymer(s).

The cross-linkable elastomeric composition may comprise one or more than one conjugated diene polymer(s) (I) in admixture.

Conjugated diene polymers (I) suitable for the tyre of the present invention and the manufacture thereof are disclosed for instance in the patent application JP2023-072878 in the name of Asahi, herein incorporated by reference.

The conjugated diene polymer (I) comprises bound conjugated diene monomer units and optionally bound aromatic vinyl monomer units. Preferably the conjugated diene polymer (I) comprises bound conjugated diene monomer units and bound aromatic vinyl monomer units. Preferably the conjugated diene polymer (I) comprises bound aromatic vinyl monomer units in both the at least two polymer segments, hence the amount of X1 and X2 (wt%) is higher than zero (> 0 wt%). More preferably, the conjugated diene polymer (I) comprises bound 1,3-butadiene units and bound styrene units in both the at least two polymer segments.

Examples of conjugated diene monomer units include, but are not limited to, 1,3-butadiene, isoprene, 2,3-dimethyl-1,3-butadiene, 1,3-pentadiene, 3-methyl-1,3-pentadiene, 1,3-hexadiene, 1,3-heptadiene and mixtures thereof. Among them, 1,3-butadiene and isoprene are preferred.

Examples of aromatic vinyl monomer units include, but are not limited to, styrene, p-methylstyrene, $\alpha$-methylstyrene, vinylethylbenzene, vinylxylene, vinyl naphthalene, diphenylethylene and mixtures thereof. Among them, styrene is preferred.

The conjugated diene polymer (I) is a conjugated diene polymer comprising at least two polymer segments. The polymer segment is a portion of the conjugated diene polymer (I) composed of conjugated diene monomer units and aromatic vinyl monomer units, or composed of conjugated diene monomer units only.

The first polymer segment and the second polymer segment may each comprise a plurality of polymer segments, but, preferably, they comprise a single polymer segment.

In the conjugated diene polymer (I), the polymer segments may be directly bound to each other or may be bound via a coupling agent.

Polymer segments other than the first polymer segment and second polymer segment need not be comprised but may be present, for instance after first and second segment synthesis, a third segment may be included in order to raise the reactivity between the conjugated diene polymer and coupling agent.

In the conjugated diene polymer (I), the % ratio of the sum of the weights of the first and second polymer segments to the total weight of the conjugated diene polymer (I) is preferably higher than 70 %, more preferably higher than 80 % and even more preferably higher than 90 %.

In the conjugated diene polymer (I), the first and second polymer segments preferably have a predetermined weight ratio r1 and r2 - namely the ratio of the weight of the first polymer segment and of the second polymer segment to the total weight of the conjugated diene polymer (I) respectively.

The conjugated diene polymer (I) is preferably characterized by a ratio $R = r_1/r_2$ from 0.25 to 4.00, more preferably from 1.00 to 3.00, even more preferably from 1.50 to 2.40, wherein r1 is the weight ratio of the first polymer segment with lower Tg and r2 is the weight ratio of the second polymer segment with higher Tg in the conjugated diene polymer (I).

The polymer segments in the conjugated diene polymer (I) differ from each other in their microstructure.

The distribution of the conjugated diene monomer units and of the optional aromatic vinyl units in the polymer segments is peculiar.

In fact, in the conjugated diene polymer (I), when aromatic vinyl units are present, the absolute value of the difference between the amount of bound aromatic vinyl monomer unit of the first polymer segment $X_1$ (wt%) and the amount of bound aromatic vinyl monomer unit of the second polymer segment $X_2$ (wt%) ($|X_1 - X_2|$) is less than 5 % (wt%). Preferably, the conjugated diene polymer (I) comprises bound aromatic vinyl monomer units.

Preferably, in the conjugated diene polymer (I), the polymer segments have few or no blocks comprising four or more aromatic vinyl monomer units chained together, herein referred as "bound aromatic vinyl monomer unit block". Preferably, the content of these blocks in the conjugated diene polymer (I) is at most 1.0 wt%, more preferably at most 0.1 wt%, more preferably is 0 wt% of the total weight of the conjugated diene polymer (I). When the conjugated diene polymer (I) is a butadiene-styrene polymer, the content of bound aromatic vinyl monomer unit blocks can be measured by analysing the amount of polystyrene insoluble in methanol according to the Kolthoff method (I. M. Kolthoff, et al., J. Polym. Sci. 1, 429 (1964)).

With fewer or no bound aromatic vinyl monomer unit blocks, the conjugated diene polymer (I) more likely has a single glass transition temperature (Tg).

When present, the amount of aromatic vinyl unit in the first polymer segment X1 (wt%) and in the second polymer segment X2 (wt%) is preferably at least 5 wt%, more preferably at least 7 wt%, even more preferably at least 9 wt% and preferably at most 30 wt%, more preferably at most 25 wt% and even more preferably at most 23 wt% in the respective polymer segment.

In the conjugated diene polymer (I), the absolute value of the difference ($|X1-X2|$) between the amount of bound aromatic vinyl monomer X1 (% by weight) of the first polymer segment and the amount of bound aromatic vinyl monomer X2 (% by weight) of the second polymer segment is preferably at most 3 wt%, more preferably at most 2.5 wt%.

When ($|X_1-X_2|$) is less than 5wt%, the distribution of the aromatic vinyl monomer units becomes uniform, the microphase separation of the conjugated diene polymer (I) is suppressed, and the vulcanized compound thereof tends to have better tensile properties. The absolute value of the difference in the amount of bound aromatic vinyl monomer of the polymer segments can be controlled within a numerical range by adjusting the aromatic vinyl monomer amount added in the polymerisation step of each polymer segment.

The amount of vinyl unit $Y_1$ (mol%) in the bound conjugated diene of the first polymer segment is preferably at least 14 mol%, more preferably at least 16 mol%, and even more preferably at least 17 mol% and preferably at most 40 mol%, more preferably at most 35 mol%, even more preferably at most 30 mol%, still more preferably at most 23 mol%.

The amount of the vinyl unit Y2 (mol%) in the bound conjugated diene of the second polymer segment is preferably at least 40 mol%, more preferably at least 45 mol%, even more preferably at least 50 mol%, still more preferably at least 55 mol% and preferably at most 65 mol%, more preferably at most 62 mol%, and even more preferably at most 61 mol%. Furthermore, in the conjugated diene polymer (I), the difference (Y2 -Y1) between the amount of vinyl unit Y2 (mol %) in the bound conjugated diene of the second polymer segment and the amount of vinyl unit Y1 (mol %) in the bound conjugated diene of the first polymer segment, preferably is from 20 mol% to 45 mol%, more preferably from 25 mol% to 45 mol%.

Suitable ranges of vinyl unit amounts Y1 and Y2 in the bound conjugated dienes of the polymer segments may be obtained by arbitrarily combining the above upper and lower limits.

When (Y2-Y1) is 15 mol% or more, the vulcanized compound tends to have an excellent balance between wet grip performance and winter performance. On the other hand, when (Y2-Y1) is 50 mol% or less, microphase separation of the conjugated diene polymer (I) is suppressed, and the vulcanized compound thereof tends to have excellent tensile strength. The value of (Y2-Y1) can be controlled within the above numerical range for instance by varying the amount of polar substance added in the polymerisation steps (P1 and P2) described below.

Finally, the total amount of bound aromatic vinyl monomer units $X_{all}$ (wt%) in the conjugated diene polymer (I) and the total amount of vinyl unit in the bound conjugated diene polymer units of the conjugated diene polymer (I) $Y_{all}$

(mol %), satisfy the Gordon - Taylor equation thus providing a calculated Tg $_{CALC}$ having a value preferably from -75.0°C to -30.0°C, more preferably from -72.0 °C to -40.0 °C.

When the amount X$_{all}$ and Y$_{all}$ satisfy the Gordon-Taylor equation, providing a Tg $_{CALC}$ preferably from -75.0°C to -30.0°C, more preferably from -72.0 °C to -40.0 °C, the wet grip performance, the winter performance and wear resistance performance of the vulcanized compounds improve.

The total amount of aromatic vinyl unit X$_{all}$ (wt%) and of vinyl unit Y$_{all}$ (mol%) in the conjugated diene polymer (I) can be evaluated, for instance, by NMR according to the method of ISO 21561-1:20015 as described in the experimental section below.

The conjugated diene polymer (I) may have more than one glass transition temperature, but preferably it has a single glass transition temperature (Tg).

The conjugated diene polymer (I), comprising two or more polymer segments, undergoes glass transition in a plurality of temperature ranges, as the polymer segments have different glass transition temperatures. In fact, according to the above, the conjugated diene polymer (I) comprises segments with higher content of vinyl units and higher Tg, herein named the second polymer segment, and segments with lower content of vinyl units and lower Tg, herein named the first polymer segment - the first and second polymer segments having substantially the same content of aromatic vinyl units, when present.

The estimated Tg of the polymer segments, calculated as explained below, have the same trend, namely the calculated glass transition temperature of the first polymer segment (Tg $_{CALC1}$) is lower than the calculated glass transition temperature of the second polymer segment (Tg $_{CALC2}$).

Preferably, the difference between Tg $_{CALC2}$ and Tg $_{CALC1}$ is at least 10.0 °C, more preferably at least 20.0 °C, even more preferably at least 25.0 °C. Preferably said difference is at most 40.0 °C, more preferably at most 35.0 °C.

Among the two or more polymer segments contained in the conjugated diene polymer (I) the polymer segment whose Tg $_{CALC}$ is lower by 5 °C or more with respect to the average Tg $_{CALC}$ of the conjugated diene polymer (I) is herein referred to as the "first polymer segment" and its calculated Tg as Tg $_{CALC1}$ while if higher by 5 °C or more it is herein referred to as the "second polymer segment" and its calculated Tg as Tg $_{CALC2}$.

By setting the microstructure of the conjugated diene polymer (I) segments, namely by selecting appropriate bound aromatic vinyl monomer unit amount (X1, X2) and vinyl unit amount (Y1, Y2) of each polymer segment as explained above, and consequently the respective glass transition temperatures within a certain range, it is thus possible to obtain vulcanized compounds with excellent wet grip performance and winter performance.

This distribution is responsible for a broadening of the DSC glass transition, whose inflection point is usually correlated to the polymer Tg of the conjugated diene polymer (I), resulting in rubber compounds with excellent wet grip and winter performance in addition to very good abrasion resistance and tensile properties.

Usually, in the tyre field, conventional conjugated diene polymers with low Tg are used when winter performance is important, in order to achieve a sufficiently high flexibility at temperatures between -30 °C and -10 °C. However, with conventional elastomeric polymers, DSC glass transition profile is relatively sharp, which leads to relatively low value of Tan D in the same range -30 °C to 0 °C, hence to poor snow and wet grip performance. In the conjugated diene polymer (I) comprising the at least two polymer segments, the greater the difference in the Tg of the two polymer segments, the wider the DSC glass transition profile and hence the better the balance between winter and wet grip performance.

In order to widen said DSC glass transition profile, the differences of the amount of aromatic vinyl units and of vinyl units between the first and second polymer segment respectively should be both increased.

However, if both said differences increase too much, the two polymer segments are less compatible and the tensile strength of the vulcanized product tends to deteriorate. In order to obtain a vulcanized product with appropriate tensile strength, it is effective to limit the gap in the amount of bound aromatic vinyl monomer units of the two polymer segments ($|\Delta X = X1-X2|$) within an appropriate range and to increase the difference in the amount of vinyl unit in the bound conjugated diene of the two polymer segments (Y2-Y1), within the ranges recited above.

The glass transition temperature of the conjugated diene polymer (I) depends on its microstructure and can be estimated from the total amount of bound aromatic vinyl units Xall (wt%) and the total amount of vinyl unit Yall (mol%) according to the Gordon-Taylor equation (Gordon, M.; Taylor, J. S.; J. Appl. Chem. 1952, 2, 493), extended to two or more component systems in the following equation (1)

$$Tg = \frac{\Sigma_i \left( \frac{\Delta \alpha_i w_i Tg_i}{\rho_i} \right)}{\Sigma_i \left( \frac{\Delta \alpha_i w_i}{\rho_i} \right)}$$

(1)

The value so obtained is herein named calculated Tg (Tg $_{CALC}$).

In the above equation (1), the subscript i of the variable represents each component of the microstructure in the conjugated diene polymer (I), $\Delta\alpha_i$ is the difference in thermal expansion before and after glass transition of the sole polymer of component i, $w_i$ is the weight ratio of component i in the conjugated diene polymer (I), $Tg_i$ is the glass transition temperature of the sole polymer of component i and $\rho_i$ is the density of the sole polymer of component i. For the variables of the above equation, both literature values and experimental measured values can be used.

For example, when a conjugated diene polymer comprises styrene and one of the i's is a styrene component, the thermal expansion coefficient of polystyrene (J. Brandrup et al, Polymer Handbook, Group 3, (US), John Wiley & Sons, Inc. 1966, VI-75) $\Delta\alpha_i$ is $3.6 \times 10^{-4}$ K$^{-1}$, $Tg_i$ measured by DSC is 105.3 °C and $\rho_i = 1.02$ g/cm$^3$ from the measured density. When the conjugated diene polymer (I) is a butadiene-styrene polymer, the amount of the bound aromatic vinyl unit $X_{all}$ (wt%), the amount of vinyl unit of the bound conjugated diene $Y_{all}$ (mol%), the thermal expansion coefficient ($\Delta\alpha$) for polystyrene (PS), poly-1,2-butadiene (1,2-PBd) and poly-1,4-butadiene (1,4-PBd), the respective glass transition temperatures (Tg) and densities (p) are known and thus the Tg $_{CALC}$ of the conjugated diene polymer (I) can be calculated by subsequent approximations as shown in the following equations:

$$Tg_{CALC} =$$

$$= \frac{\frac{\Delta a_{st} \times \frac{X_{all}}{100} \times Tg_{(PS)}}{\rho_{(PS)}} + \frac{\Delta a_{(1,4\,PBd)} \times \left(1-\frac{X_{all}}{100}\right) \times \left(1-\frac{Y_{all}}{100}\right) \times Tg_{(1,4PBd)} + \Delta a_{(1,2\,PBd)} \times \left(1-\frac{X_{all}}{100}\right) \times \left(\frac{Y_{all}}{100}\right) \times Tg_{(1,2PBd)}}{\rho_{(PBd)}}}{\frac{\Delta a_{st} \times \frac{X_{all}}{100}}{\rho_{(PS)}} + \frac{\Delta a_{(1,4\,PBd)} \times \left(1-\frac{X_{all}}{100}\right) \times \left(1-\frac{Y_{all}}{100}\right) + \Delta a_{(1,2\,PBd)} \times \left(1-\frac{X_{all}}{100}\right) \times \left(\frac{Y_{all}}{100}\right)}{\rho_{(PBd)}}}$$

$$= \frac{\frac{X_{all}}{100} \times 37,2 + \left(1-\frac{X_{all}}{100}\right) \times \left\{\left(1-\frac{Y_{all}}{100}\right) \times (-57.5) + \left(\frac{Y_{all}}{100}\right) \times (-5.38)\right\}}{\frac{X_{all}}{100} \times 0.36 + \left(1-\frac{X_{all}}{100}\right) \times \left\{\left(1-\frac{Y_{all}}{100}\right) \times (0.56) + \left(\frac{Y_{all}}{100}\right) \times (0.46)\right\}}$$

$$= \frac{-5750 + 94.7\, X_{all} + 52.12\, Y_{all} - 0.5212\, X_{all}\, Y_{all}}{56 - 0.2\, X_{all} - 0.1\, Y_{all} + 0.001\, X_{all}\, Y_{all}}$$

and finally,

$$Tg_{CALC} = \frac{-5750 + 95\, X_{all} + 52\, Y_{all} - 0.52 X_{all}\, Y_{all}}{56 - 0.2\, X_{all} - 0.1\, Y_{all}} \qquad (1A)$$

When the conjugated diene polymer is a homopolymer of butadiene or a copolymer of butadiene-styrene, the glass transition temperature of the conjugated diene polymer (I) can be easily calculated by the above equation (1A) from values normally known in polymer design, such as the amount of bound aromatic vinyl unit $X_{all}$ (wt%) in the conjugated diene polymer (I) and the amount of vinyl unit of the bound conjugated diene $Y_{all}$ (mol%).

For the conjugated diene polymer (I), the Tg $_{CALC}$ is preferably at least -72.0 °C, preferably at least -70.0 °C, more preferably at least -68 °C and preferably at most -40.0 °C, preferably at most -42.0 °C, more preferably at most -44.0 °C.

The same equation (1) / (1A) is applicable to calculate the Tg $_{CALC}$ of a segment n by using the respective Xn and Yn content in that segment.

The glass transition temperature of the conjugated diene polymer (I) can be controlled within the numerical range described above by adjusting the total amount of bound aromatic vinyl monomer unit $X_{all}$ (wt%) in the conjugated diene polymer (I) and the total amount of vinyl unit $Y_{all}$ (mol%) in the bound conjugated diene monomer units of the conjugated diene polymer (I).

By setting the Tg calculated by the above equation (1) or (1A) (Tg $_{CALC}$) preferably to be between -72.0 °C and -40.0 °C, also the actual measured glass transition temperature will roughly be in that preferred range.

However, the calculated Tg $_{CALC}$ according to equation (1) may differ from the observed Tg measured by DSC (e.g. a difference of 2 to 5 °C) depending on the polymer microstructure and /or the specific settings of DSC measurements, in particular cooling and heating rates. Specifically, the discrepancy between the Tg calculated from the above equation (1) or (1A) and the measured DSC glass transition temperature tends to be higher when the difference in the Tg $_{CALC}$ of the segments (Tg $_{CALC2}$ - Tg $_{CALC1}$), calculated by applying to them the equation (1) or (1A), is 33 or more, or when the ratio R of the weight ratio of the polymeric segments described above is in the interval of 0.67 to 1.50.

Preferably, the experimental Tg of the conjugated diene polymer (I) herein named Tg $_{DSC}$ as determined by DSC according to ISO 22768:2006, is from -75.0°C to -30.0°C or preferably of at least -72.0 °C, more preferably from -72.0 °C to -40.0 °C.

The Tg $_{DSC}$ of the conjugated diene polymer (I) is preferably from -70.0 °C to -40.0 °C, more preferably from -65.0 °C to -55.0 °C for winter or all season applications. Preferably the Tg $_{DSC}$ of the conjugated diene polymer (I) is from -55.0 °C to -20.0 °C, more preferably from -55.0 °C to -40.0 °C for summer tyres.

When the Tg $_{DSC}$ satisfies the above ranges, the vulcanized compound of the conjugated diene polymer (I) tends to have overall optimized performance balance (namely wet grip, wear and RR i.e. fuel economy) within the specific applications (winter, all season or summer).

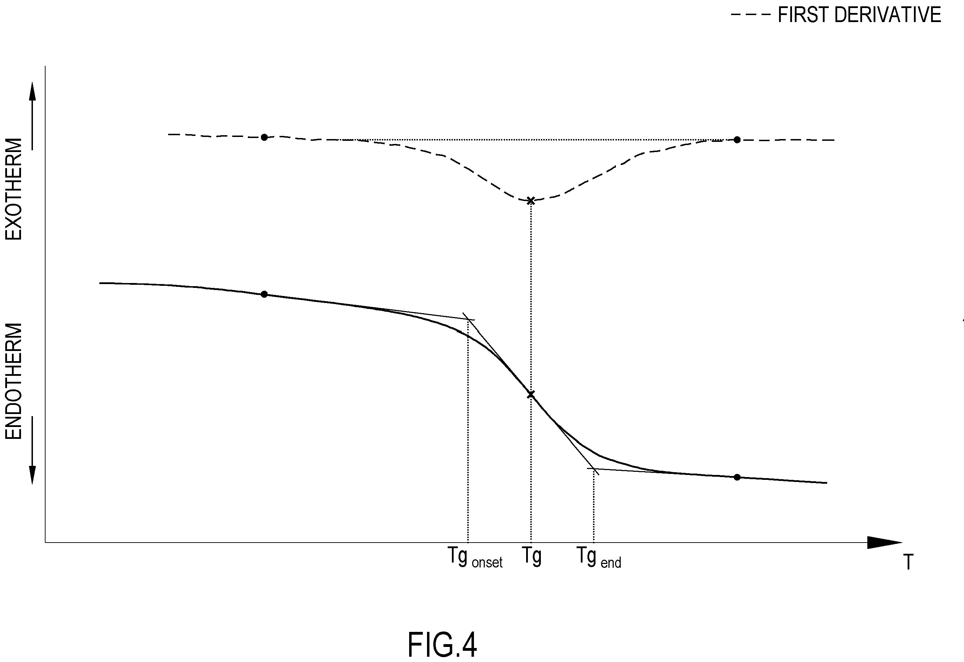

From the DSC thermogram of the conjugated diene polymer (I), Tg $_{DSC}$ onset temperature and Tg $_{DSC}$ end temperature can be extrapolated, for instance as described in the present experimental part and illustrated in Figure 4.

The difference between the extrapolated Tg $_{DSC}$ end temperature and the extrapolated Tg $_{DSC}$ onset temperature of the Tg $_{DSC}$ of the conjugated diene polymer (I) may be lower than 15.0 °C or lower than 14.5 °C or lower than 14.0 °C. Preferably said difference is higher than 10.0 °C, preferably higher than 12.0, typically is between 10.0 °C and 15.0 °C.

The weight average molecular weight (Mw) of the conjugated diene polymer (I) measured by gel permeation chromatography (GPC) is preferably at least 350,000 g/mol, more preferably at least 400,000. In addition, the weight average molecular weight is preferably at most 1,350,000 g/mol, more preferably at most 1,000,000 g/mol, even more preferably at most 950,000 g/mol, and still more preferably at most 800,000 g/mol, 750,000 g/mol or 650,000 g/mol.

Preferably, the weight average molecular weight (Mw) of the conjugated diene polymer (I) is from 350,000 g/mol to 1,350,000 g/mol, preferably from 350,000 g/mol to 1,000,000 g/mol, more preferably from 400,000 g/mol to 650,000 g/mol.

The number average molecular weight (Mn) of the conjugated diene polymer (I) measured by GPC is preferably at least 100,000 g/mol, more preferably at least 150,000 g/mol and even more preferably at least 200,000 g/mol. In addition, the number average molecular weight is preferably at most 1,000,000 g/mol, more preferably at most 700,000 g/mol, and even more preferably at most 500,000 g/mol.

The weight average molecular weight (Mw) and number average molecular weight (Mn) of the conjugated diene polymer (I) can be controlled within the above numerical range by adjusting the ratio of the amount of the polymerization initiator to the amount of the monomer used, and type and amount of the coupling agent used.

The molecular weight distribution of the conjugated diene polymer (I) is represented by the ratio of the weight average molecular weight (Mw) to the number average molecular weight (Mn) (polydispersity index Mw/Mn). The conjugated diene polymer (I) preferably has a polydispersity index Mw/Mn of at least 1.20, more preferably at least 1.30, even more preferably at least 1.40. In addition, it is preferably at most 2.20, more preferably at most 2.00, even more preferably 1.80.

The conjugated diene polymer (I) preferably comprises a nitrogen containing modifying group and preferably has a modification rate of at least 60%. The modification rate can be measured by chromatography, which can separate functional group containing modified and non-modified components. In the conjugated diene polymer (I), the modification rate can be controlled by adjusting the amount of modifying agent added and the reaction method. The conjugated diene polymer (I) preferably has a modification rate of at least 60%, more preferably at least 65%, and even more preferably at least 70%.

Preferably, the degree of branching of the conjugated diene polymer (I) is greater than 2. The obtained degree of branching depends on the type of coupling agent used.

In a preferred embodiment, the conjugated diene polymer (I) is characterized by one or more, preferably by all, the following features:

- the conjugated diene monomer unit is selected from 1,3-butadiene, isoprene and their admixtures, preferably is 1,3-butadiene;
- the aromatic vinyl monomer unit is present and is styrene;
- the % ratio of the sum of the weights of the first and second polymer segments to the total weight of the conjugated diene polymer (I) is higher than 90 %;
- the ratio R = r1/r2 of the first to the second polymer segment is from 1.50 to 2.40,
- the absolute value of the difference (|X1-X2|) is at most 2.5 wt%;
- the difference (Y2-Y1) is from 25 mol% to 45 mol%;
- the difference between Tg $_{CALC2}$ and Tg $_{CALC1}$ is at least 10.0 °C;
- the Tg $_{DSC}$ is from -65.0 °C to -55.0 °C, for winter or all season tyre and from -55.0 °C to
- 40.0 °C for summer tyre,

- the weight average molecular weight (Mw) is from 400,000 to 800,000 g/mol;
- the number average molecular weight (Mn) is preferably from 200,000 to 500,000 g/mol;
- the polydispersity index Mw/Mn from 1.30 to 2.00;
- the modification rate is of at least 70%.

Preferably, in the conjugated diene polymer (I) the weight of the copolymer comprising styrene and butadiene is at least 70 wt% of the weight of the entire conjugated diene polymer (I), more preferably at least 80 wt%, even more preferably at least 90 wt%.

The conjugated diene polymer (I) can be manufactured by a method that comprises a polymerisation process for synthesising a first polymer segment (PR1) and a polymerisation process for forming the second polymer segment at the end of the first polymer segment obtained in PR1 (PR2), according to conventional polymerization techniques.

A method for introducing a plurality of polymer segments into the molecule of a conjugated diene polymer (I) is carried out by sequentially adding a conjugated diene monomer, an aromatic vinyl monomer, a polar substance and a solvent to each reactor using a continuous solution polymerisation method in which a plurality of reactors are arranged in series. Examples of suitable polymerisation initiators are n-BuLi, sec-BuLi, tert-BuLi, Li-$(CH_2)(Me)_2$ Si-N-$(C_4H_9)_2$, Li-$(CH_2)(Me)_2$ Si-N-$(C_2H_5)_2$ and the like.

In particular, the conjugated diene polymer (I) can be manufactured according to a method that comprises a polymerisation process (PR1) for synthesising the first polymer segment in two or more continuous reactors and a polymerisation process (PR2) for forming the second polymer segment at the end of the first polymer segment obtained in PR1, wherein a polar substance is additionally added in the polymerisation process PR2.

A polar substance can randomly copolymerise an aromatic vinyl monomer with a conjugated diene monomer. Examples of polar substances are ethers, tertiary amines, alkali metal alkoxides and phosphines.

The polymerization process PR2 for obtaining the second polymer segment uses one or more connected reactors as in the first polymerization PR1. In PR2, by adding after the previous polymerization process a new conjugated diene monomer, an aromatic vinyl monomer, an inert solvent and a polar substance, etc., a second polymer segment having a higher amount of vinyl unit in the bound conjugated diene can be synthesized. This allows the formation of a second polymer segment with a Tg higher than the first polymer segment.In the method for producing the conjugated diene polymer (I) the following steps may be carried out:

- a step of coupling the active terminal of the conjugated diene polymer obtained through the polymer segment polymerisation steps, using a coupling agent such as a reactive agent with a functionality of 3 or more, and/or
- a step of modifying using a modifying agent having a nitrogen atom-containing group. The coupling agent may have any structure as long as it is a reactive compound with a functionality of 3 or more, but a reactive compound with a functionality of 3 or more having a silicon atom is preferable.

The coupling agent preferably comprises a modifying agent e.g. a coupling agent preferably comprises a nitrogen atom-containing group.

Examples of preferred coupling agents with a functionality of 3 or more having a silicon atom include halogenated silane agents, epoxidized silane agents, vinylated silane agents, alkoxysilane agents and alkoxysilane agents comprising nitrogen-containing groups. Examples of modifying agents containing nitrogen atoms include, but are not limited to, isocyanate agents, isothiocyanate agents, isocyanuric acid derivatives, carbonyl agents containing nitrogen atom group, vinyl agents containing nitrogen atom group and epoxy agents containing nitrogen atom group. Preferably in the modifying agent the nitrogen atom-containing functional group is an amine having no active hydrogen such as a tertiary amine or a protected amine.

Examples of coupling agents that are modifying agents too are epoxy compounds having a nitrogen atom-containing group such as hydrocarbon compounds comprising an epoxy group bonded to an amino group, furthermore optionally having an epoxy group bonded to an ether group.

An example of a modifying agent is an alkoxysilane agent having a nitrogen atom-containing group, such as for instance, tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also referred to as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl]ether, and (3-trimethoxysilylpropyl)phosphate. Also included are bis(3-trimethoxysilylpropyl)-[3-(2,2-dimethoxy-1-aza-2-silacyclopentane)propyl]phosphate, bis[3-(2,2-dimethoxy-1-aza-2-silacyclopentane)propyl]-(3-trimethoxysilylpropyl)phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propane-1-amine, N-benzylidene-3-(trimethoxysilyl)propane-1-amine, 1,1-(1,4-phenylene)bis(N-(3(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Further included are 1-methyl-4-[3-(trimethoxysilyl)propyl]piperazine, 1-methyl-4-[3-(triethoxysilyl)propyl]piperazine, 1-methyl-4-[3-(methyldimethoxysilyl)propyl]piperazine, 3,3'-(1,1,3,3-tetramethoxydisiloxane-1,3-diyl)bis(N,N-dimethylpropane-1-amine), 3,3'-(1,1,3,3-tetraethoxydisiloxane-1,3-diyl)bis(N,N-dimethylpropane-1-amine), 3,3'-(1,1,3,3-tetrapropoxydisiloxane-1,3-diyl)bis(N,N-dimethylpropane-1-amine), 3,3'-(1,1,3,3-tetramethoxydisiloxane-1,3-diyl)bis(N, N-diethylpropane-1-amine), 3,3'-(1,1,3,3-tetramethoxydisiloxane-1,3-diyl)bis(N,N-dipropylpropane-1-amine), 3,3'-(1,1,3,3-tetraethoxydisiloxane-1,3-diyl)bis(N,N-diethylpropane-1-amine), 3,3'-(1,1,3,3-tetrapropoxydisiloxane-1,3-diyl)bis(N,N-diethylpropane-1-amine), and 3,3'-(1,1,3,3-tetraethoxydisiloxane-1,3-diyl)bis(N, N-dipropylpropane-1-amine).

Furthermore, also included are 3,3'-(1,1,3,3-tetrapropoxydisiloxane-1,3-diyl)bis(N,N-dipropylpropane-1-amine), 3,3'-(1,1,3,3-tetramethoxydisiloxane-1,3-diyl)bis(N,N-diethylmethane-1-amine), 3,3'-(1,1,3,3-tetraethoxydisiloxane-1,3-diyl)bis(N,N-diethylmethane-1-amine), 3,3'-(1,1,3,3-tetrapropoxydisiloxane-1,3-diyl)bis(N,N-diethylmethane-1-amine), 3,3'-(1,1,3,3-tetramethoxydisiloxane-1,3-diyl)bis(N,N-dimethylmethane-1-amine), 3,3'-(1,1,3,3-tetramethoxydisiloxane-1,3-diyl)bis(N,N-dipropylmethane-1-amine), 3,3'-(1,1,3,3-tetrapropoxydisiloxane-1,3-diyl)bis(N,N-dimethylmethane-1-amine), 3,3'-(1,1,3,3-tetrapropoxydisiloxane-1,3-diyl)bis(N,N-dipropylmethane-1-amine), 3,3'-(1,1,3,3-tetraethoxydisiloxane-1,3-diyl)bis(N,N-dimethylmethane-1-amine), 3,3'-(1,1,3,3-tetraethoxydisiloxane-1,3-diyl)bis(N,N-dipropylmethane-1-amine), 1,3-bis(3-(1H-imidazol-1-yl)propyl)-1,1,3,3-tetramethoxydisiloxane, 1,3-bis(3-(1H-imidazol-1-yl)propyl)-1,1,3,3-tetraethoxydisiloxane, and 1,3-bis(3-(1H-imidazol-1-yl)propyl)-1,1,3,3-tetrapropoxydisiloxane.

Among coupling modifying agents having a nitrogen atom-containing group, protected amine agents in which active hydrogen is substituted with a protective group are included, in particular agents having alkoxysilanes moieties and protected amines are included. Suitable coupling and/or modifying agents, herein incorporated by reference, are disclosed for instance in the patent application JP2023-072878 (see the formulae A to D therein described).

In the method for preparing the present conjugated diene polymer (I), preferably an extender oil, a liquid rubber and/or a resin is further added to the produced conjugated diene-based polymer (I).

The conjugated diene polymer (I) exhibits excellent wear resistance and tensile properties, and when incorporated into a rubber composition provides for enhanced grip performance. In the present cross-linkable elastomeric composition, the complement to the conjugated diene polymer(s) (I) up to 100 phr can be one or more conventional elastomeric polymer(s), as described below.

The conventional elastomeric polymer(s) may be selected from those commonly used in sulphur-vulcanizable elastomeric compositions, which are particularly suitable for producing tyres, i.e. from among solid elastomeric polymers or copolymers with an unsaturated chain having a glass transition temperature (Tg) generally lower than 20 °C, preferably in the range from 0 °C to -110 °C.

These polymers or copolymers may be of natural origin or may be obtained by solution polymerization, emulsion polymerization or gas-phase polymerization of one or more conjugated dienes, optionally mixed with at least one comonomer, preferably selected from monoolefins, monovinylarenes and/or polar comonomers, typically in an amount not exceeding 60% by weight.

The conjugated dienes generally comprise from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof. 1,3-butadiene and isoprene are particularly preferred. The monoolefins can be selected from ethylene and $\alpha$-olefins generally comprising from 3 to 12 carbon atoms, such as for example propylene, 1-butene, 1-pentene, 1-hexene, 1-octene or mixtures thereof.

Monovinylarenes, which may optionally be used as comonomers, generally comprise from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, $\alpha$-methylstyrene, 3-

methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, and mixtures thereof. Styrene is particularly preferred. Polar comonomers that may optionally be used, can be selected, for example, from among acrylic acid and alkylacrylic acid esters, acrylonitriles, or mixtures thereof, such as, for example, methyl acrylate, ethyl acrylate, methyl methacrylate, ethyl methacrylate, acrylonitrile and mixtures thereof.

Preferably, the elastomeric polymer may be selected, for example, from cis-1,4-polyisoprene (natural or synthetic, preferably natural rubber), 3,4-polyisoprene, polybutadiene (in particular polybutadiene with a high content of 1,4-cis), isoprene/isobutene copolymers, halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The cross-linkable elastomeric composition may optionally comprise at least one polymer of one or more monoolefins with an olefinic comonomer or derivatives thereof. The monoolefins can be selected from: ethylene and $\alpha$-olefins generally comprising from 3 to 12 carbon atoms, such as for example propylene, 1-butene, 1-pentene, 1-hexene, 1-octene or mixtures thereof. The following are preferred: copolymers selected from ethylene and an $\alpha$-olefin, optionally with a diene; isobutene homopolymers or copolymers thereof with small amounts of a diene, which are optionally at least partially halogenated. The diene optionally present generally comprises from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; and mixtures thereof.

In the conventional known elastomeric polymers, the distribution of vinyl units and aromatic vinyl units is either random or it does not provide first and second polymers segments as the present ones of the conjugated diene polymer (I).

The above-mentioned polymers can optionally be functionalised along the main chain or at the ends thereof.

The functional group may be introduced into the elastomeric polymer by processes known in the art such as, for example, during the production of the elastomeric polymer by copolymerisation with at least one corresponding functionalised monomer comprising at least one ethylene unsaturation; or by subsequent modification of the elastomeric polymer by grafting at least one functionalised monomer in the presence of a free radical initiator (for example, an organic peroxide).

Alternatively, the functionalisation may be introduced by reaction with suitable terminating agents or coupling agents.

The cross-linkable elastomeric composition preferably comprises at least 10 phr or 20 phr or 30 phr or 40 phr, more preferably at least 40 phr or 50 phr, even more preferably at least 60 phr or 70 phr of at least a reinforcing filler.

The present composition may comprise from 10 phr to 150 phr, from 10 phr to 120 phr or from 10 phr to 90 phr of at least one reinforcing filler.

Preferably, the reinforcing filler is selected from carbon black, white fillers, silicate fibres, derivatives and mixtures thereof.

In an embodiment, said reinforcing filler is a white filler selected from among hydroxides, oxides and hydrated oxides, salts and hydrated salts of metals, silicates fibres, derivatives thereof and mixtures thereof. Preferably, said white filler is silica.

Commercial examples of suitable silica are Zeosil 1165 MP, Zeosil 1115 MP, Zeosil 185 GR, Efficium from Solvay, Newsil HD90 and Newsil HD200 from Wuxi, K160 and K195 from Wilmar, H160AT and H180 AT from IQE, Zeopol 8755 and 8745 from Huber, Perkasil TF100 from Grace, Hi-Sil EZ 120 G, EZ 160G, EZ 200G from PPG, Ultrasil 7000 GR and Ultrasil 9100 GR from Evonik.

In one embodiment, said reinforcing filler comprises silica mixed with carbon black.

In one embodiment, said reinforcing filler comprises a modified silica.

Silica may be modified for instance by reaction with silsequioxanes (as in WO2018078480A1), with pyrroles (as in WO2016050887A1) or with silanizing agents. Commercial examples of suitable silanizing agents are Si69, Dynasilan AMEO and Dynasilan GLYEO from Evonik.

The modified silica may be a sulphurised silanized silica.

Sulphurised silanized silica is a silica prepared by reaction of a silica or of a metal silicate, with at least one sulphurised silanizing agent.

A commercial example of suitable sulphurised silanized silica is Agilon 400 silica from PPG. In one embodiment, said reinforcing filler comprises a modified silica mixed with carbon black.

In one embodiment, said reinforcing filler comprises silicates, such as lamellar silicates (e.g. bentonites, alloysite, laponite, saponite, vermiculite or hydrotalcite) or silicate fibres (e.g. sepiolite fibres, paligorskite fibres also known as attapulgite, wollastonite fibres, imogolite fibres) optionally modified, or their admixtures.

In one embodiment, said reinforcing filler comprises silicate fibres mixed with carbon black. In one embodiment, said silicate fibres are modified silicate fibres, such as those described in WO2016174629A1, in WO2016174628A1, those organically modified by reaction, for example, with quaternary ammonium salts or with a silanizing agent.

In one embodiment, said reinforcing filler is carbon black, preferably selected from those having a surface area not smaller than 20 $m^2/g$, preferably larger than 50 $m^2/g$ (as determined by STSA - statistical thickness surface area according to ISO 18852:2005). Carbon black may be for example N110, N115, N121, N134, N220, N234, N326, N330, N375 or N550, N660 marketed by Birla Group (India) or by Cabot Corporation, Vulcan® 1391 supplied by Cabot Corporation or Birla Carbon™ 2115 supplied by Birla Group.

The cross-linkable elastomeric composition comprises at least 0.1 phr of a vulcanizing agent

Preferably, the cross-linkable elastomeric composition comprises at least 0.2 phr, 0.5 phr, 0.8 phr or 1 phr of at least one vulcanizing agent.

Preferably, the composition comprises from 0.1 to 10 phr, from 0.2 to 10 phr, from 1 to 10 phr or from 1.5 to 5 phr of at least one vulcanizing agent.

The at least one vulcanizing agent is preferably selected from sulphur, sulphurised agents (sulphur donors), such as, for example, bis[(trialkoxysilyl)propyl]polysulphides, caprolactam-disulphide or peroxides and mixtures thereof.

Preferably, the vulcanizing agent is sulphur, preferably selected from soluble sulphur (crystalline sulphur), insoluble sulphur (polymeric sulphur), oil-dispersed sulphur and mixtures thereof.

Commercial example of a vulcanizing agent suitable for use in the cross-linkable elastomeric composition is the soluble sulphur of Zolfindustria (Italy).

In the present cross-linkable elastomeric composition, the vulcanizing agent may be used together with adjuvants such as vulcanization activators, accelerators and/or retardants known to those skilled in the art.

The cross-linkable elastomeric composition may optionally comprise at least one vulcanization activator.

Vulcanization activators suitable for use in the present cross-linkable elastomeric composition are zinc compounds, in particular ZnO, $ZnCO_3$, zinc salts of saturated or unsaturated fatty acids comprising from 8 to 18 carbon atoms, which are preferably formed in situ in the cross-linkable elastomeric composition by reaction of ZnO and of the fatty acid or mixtures thereof. For example, zinc stearate is used, preferably zinc stearate formed in situ in the cross-linkable elastomeric composition, from ZnO and fatty acid, or magnesium stearate, formed from MgO, or mixtures thereof.

The vulcanization activator may be present in the cross-linkable elastomeric composition in amounts preferably from 0.2 phr to 15 phr, more preferably from 1 phr to 5 phr.

Preferred activating agents derive from the reaction of zinc oxide and stearic acid.

An example of activator is the product Aktiplast ST marketed by Rheinchemie.

The cross-linkable elastomeric composition may further comprise at least one vulcanization accelerator.

Vulcanization accelerators that are commonly used may be, for example, selected from dithiocarbamates, guanidines, thioureas, thiazoles, sulphenamides, sulphenimides, thiurams, amines, xanthates, or mixtures thereof.

Preferably, the accelerator agent is selected from mercaptobenzothiazole (MBT), N-cyclohexyl-2-benzothiazol-sulphenamide (CBS), N-tert-butyl-2-benzothiazol-sulphenamide (TBBS) and mixtures thereof.

Commercial examples of accelerators suitable for use in the present cross-linkable elastomeric composition are N-cyclohexyl-2-benzothiazyl-sulphenamide Vulkacit® (CBS or CZ), and N-terbutyl 2-benzothiazil sulphenamide, Vulkacit® NZ/EGC marketed by Lanxess. Vulcanization accelerators may be used in the present cross-linkable elastomeric composition in an amount preferably from 0.05 phr to 10 phr, preferably from 0.1 phr to 7 phr, more preferably from 0.5 phr to 5 phr.

The cross-linkable elastomeric composition may optionally comprise at least one vulcanization retardant agent.

The vulcanization retardant agent suitable for use in the present cross-linkable elastomeric composition is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G of Lanxess.

The vulcanization retardant agent may be present in the present cross-linkable elastomeric composition in an amount of preferably from 0.05 phr to 2 phr.

The present cross-linkable elastomeric composition may comprise one or more vulcanization retardant agents as defined above in a mixture.

The cross-linkable elastomeric composition may further comprise at least 0.05 phr, preferably at least 0.1 phr or 0.5 phr, more preferably at least 1 phr or 2 phr of at least one silane coupling agent.

Preferably, the cross-linkable elastomeric composition comprises from 0.1 phr to 20.0 phr or from 0.5 phr to 10.0 phr, even more preferably from 1.0 phr to 5.0 phr of at least one silane coupling agent.

Preferably, said coupling agent is a silane coupling agent selected from those having at least one hydrolysable silane group which may be identified, for example, by the following general formula:

$$(R')_3Si-C_nH_{2n}-X$$

wherein the groups R', equal or different from each other, are selected from: alkyl, alkoxy or aryloxy groups or from halogen atoms, provided that at least one of the groups R' is an alkoxy or an aryloxy group; n is an integer of from 1 to 6; X is a group selected from: nitrous, mercapto, amino, epoxide, vinyl, imide, chloro, $-(S)_mC_nH_{2n}-Si-(R')_3$ and -S-COR' group, wherein m and n are integers from 1 to 6 and R' groups are as defined above.

Particularly preferred silane coupling agents are bis(3-triethoxysilylpropyl)tetrasulphide and bis(3-triethoxysilylpropyl)disulphide. Said coupling agents may be added as such or in mixture with an inert filler (such as carbon black) so as to facilitate their incorporation into the cross-linkable elastomeric composition.

An example of the silane coupling agent is TESPT bis(3-triethoxysilylpropyl)tetrasulphide Si69 marketed by Evonik.

The cross-linkable elastomeric composition may further comprise one or more additional ingredients, commonly used in the field, such as for instance plasticizing oils, resins, antioxidant and/or anti-ozone agents (anti-aging agents), waxes, adhesives and the like. For example, the cross-linkable elastomeric composition according to the present invention, in order to improve the workability of the compound, may further comprise at least one plasticizing oil.

The amount of plasticizer is preferably in the range from 5 to 50 phr, preferably from 10 to 40 phr.

The term "plasticizing oil" means a process oil derived from petroleum, a mineral oil, a vegetable oil, a synthetic oil or combinations thereof.

The plasticizing oil may be a process oil derived from petroleum selected from paraffines (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract), RAE (Residual Aromatic Extract) known in the industry.

The plasticizing oil may be an oil of natural or synthetic origin derived from the esterification of glycerol with fatty acids, comprising glycerine triglycerides, diglycerides, monoglycerides or mixtures thereof.

Examples of suitable vegetable oils are sunflower, soybean, linseed, rapeseed, castor and cotton oil.

The plasticizing oil may be a synthetic oil selected from among the alkyl or aryl esters of phthalic acid or phosphoric acid.

The cross-linkable elastomeric composition may further comprise at least one resin.

The resin is a non-reactive resin, preferably selected from among hydrocarbon resins, phenolic resins, natural resins and mixtures thereof.

The amount of resin is preferably in the range from 5 to 30 phr, more preferably from 10 to 20 phr.

The cross-linkable elastomeric composition may optionally comprise one or more liquid polymer(s). Liquid polymers are preferably selected from among functionalized or not functionalized liquid BR, liquid SBR or liquid IR, with Mw preferably lower than 20,000 g/mol. The amount of liquid polymers is preferably in the range from 5 to 30 phr, more preferably from 10 to 20 phr.

The cross-linkable elastomeric composition may optionally comprise at least one wax. The wax may be for example a petroleum wax or a mixture of paraffins.

Commercial examples of suitable waxes are the Repsol N-paraffin mixture and the Antilux® 654 microcrystalline wax from Rhein Chemie.

The wax may be present in the cross-linkable elastomeric composition in an overall amount generally from 0.1 phr to 20 phr, preferably from 0.5 phr to 10 phr, more preferably from 1 phr to 5 phr.

The cross-linkable elastomeric composition may optionally comprise at least one antioxidant agent.

The antioxidant agent is preferably selected from N-isopropyl-N'-phenyl-p-phenylenediamine (IPPD), N-(-1,3-dimethyl-butyl)-n'-phenyl-p-phenylenediamine (6PPD), N,N'-bis-(1,4-dimethyl-pentyl)-p-phenylenediamine (77PD), N,N'-bis-(1-ethyl-3-methylpentyl)-p-phenylenediamine (DOPD), N,N'-bis-(1,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N-cyclohexyl-p-phenylenediamine, N-phenyl-N'-1-methylheptyl-p-phenylenediamine and the like, and mixtures thereof, preferably it is N-1,3-dimethylbutyl-N-phenyl-p-phenylenediamine (6-PPD).

A commercial example of a suitable antioxidant agent is 6PPD from Solutia or Santoflex produced by Eastman.

The antioxidant agent may be present in the cross-linkable elastomeric composition in an overall amount preferably from 0.1 phr to 20 phr, more preferably from 0.5 phr to 10 phr. In one embodiment, a preferred cross-linkable elastomeric composition for winter or all season use comprises:

- 100 phr of one or more elastomeric polymer(s), of which at least 50 phr of a conjugated diene polymer (I), the conjugated diene polymer (I) having a Tg $_{DSC}$ from -70.0 °C to -40.0 °C, preferably from -65.0 °C to -55.0 °C,
- at least 50 phr, preferably from 80 to 130 phr, of at least a reinforcing filler, preferably silica,
- at least 10 phr, preferably from 15 a 25 phr of a plasticizer, preferably of an oil,
- optionally at least 20 phr, preferably from 30 to 40 phr, of a resin,
- optionally at least 10 phr, preferably from 15 to 25 phr, of a liquid polymer,

- at least 0.2 phr, preferably from 0.5 to 1.0 phr of a vulcanizing agent, preferably sulphur,
- at least 0.5 phr, preferably from 0.8 a 1.5 phr, of one or more vulcanization accelerators. In one embodiment, a preferred cross-linkable elastomeric composition for summer use comprises:
- 100 phr of one or more elastomeric polymer(s), of which at least 50 phr of a conjugated diene polymer (I), the conjugated diene polymer (I) having a Tg $_{DSC}$ from -55.0 °C to -20.0 °C, preferably from -55.0 °C to -40.0 °C,
- at least 50 phr, preferably from 70 to 110 phr, of a reinforcing filler, preferably silica,
- at least 10 phr, preferably from 15 a 20 phr, of a plasticizer, preferably oil,
- optionally at least 10 phr, preferably from 15 to 25 phr, of a resin,
- optionally at least 5 phr, preferably from 10 to 20 phr of a liquid polymer,
- at least 0.5 phr, preferably from 1.0 to 2.0 phr of a vulcanizing agent, preferably sulphur,
- at least 1 phr, preferably from 3 to 4 phr, of one or more vulcanization accelerators.

The cross-linkable elastomeric composition described above is then cross-linked to provide the present cross-linked elastomeric compound.

The present cross-linked elastomeric compound is characterised by a particular hysteresis pattern.

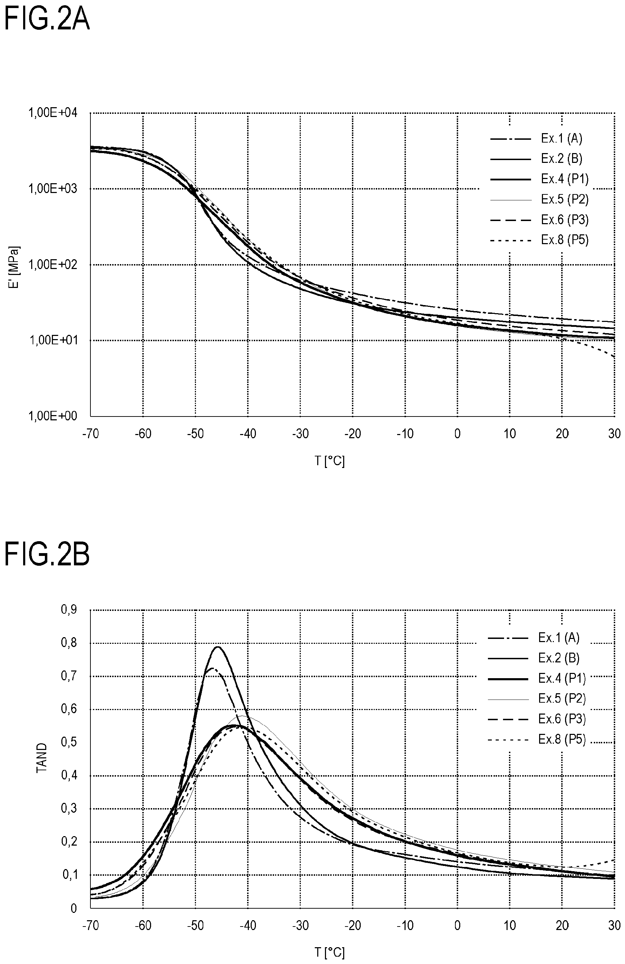

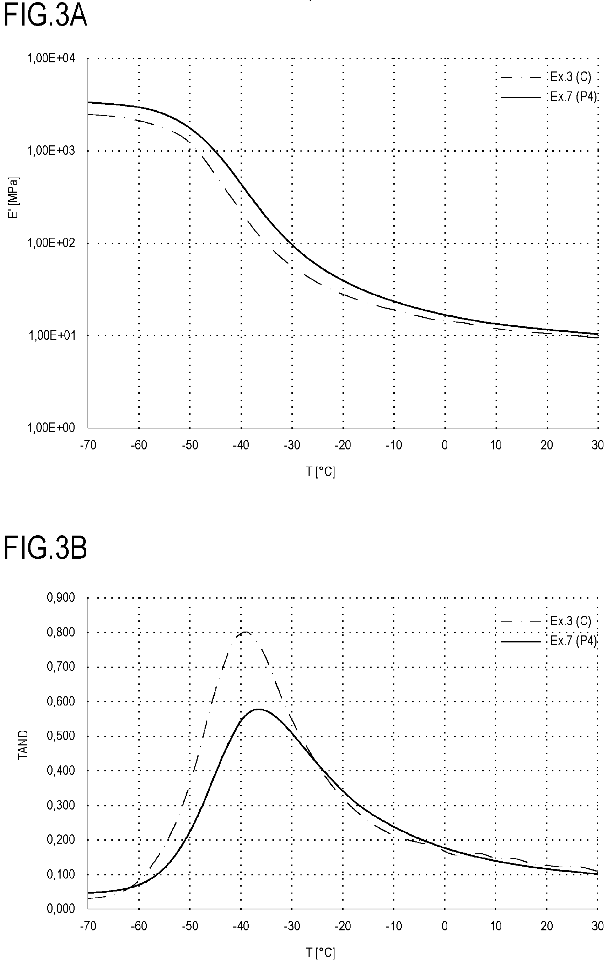

In fact, unlike known elastomeric compounds comprising conventional SBR, for example reference compounds of Ex. 1 and of Ex. 2, Figure 2B and Ex. 3, Figure 3B, - where the hysteresis results in a narrow high peak centred around the Tg temperature of the compound with a steep decrease after the peak as T increases and consequent low Tan D values in the region from -30 °C to +30 °C - the compounds for the tyre of the invention (Ex. 4, Ex. 5, Ex. 6, Figure 2B and Ex. 7, Figure 3B) instead show a broad flattened Tan D peak with a less steep downward slope and higher Tan D values, in the temperature range from -30 °C to +30 °C of interest for improved snow / wet grip performance.

Furthermore, the present cross-linked elastomeric compounds (Ex. 4, Ex. 5, Ex. 6, Figure 2A and Ex. 7, Figure 3A) as the temperature decreases from -30 °C to -50 °C show a smoother or similar increase of the stiffness (E') with respect to the corresponding reference compounds. This behaviour together with the broadening of the Tan D peak at temperatures from -30 °C to +30 °C is predictive of a higher wet grip.

In addition, the compounds for the tyre of the invention (Ex. 4, Ex. 5, Ex. 6 and Ex. 7) are endowed with a lower Payne effect (see Table 5) indicating that the dispersion of the filler into the polymer matrix is better, as evidenced by lower hardness values.

Finally, the present cross-linked elastomeric compounds (Ex. 4, Ex. 5, Ex. 6 and Ex. 7) showed lower or similar Mooney viscosity compared to the reference compounds of Ex. 1, Ex. 2 and Ex. 3, denoting a good compound processability, and static properties in line (see Table 4).

The present cross-linked elastomeric compound may be prepared by a conventional process comprising, for instance, a first non-productive step and a second productive step, followed by cross-linking.

The process typically comprises:

- in the first non-productive step, mixing the elastomeric polymer(s) including the present conjugated diene polymer (I), the reinforcing filler and optionally an antioxidant, a compatibilizing agent, an anti-ozone and/or a wax and other optional ingredients but the vulcanizing agent, at a temperature between 110 and 190 °C, to give a first elastomeric compound,
- in the second productive step, adding the curing system, to the first elastomeric compound, comprising at least a vulcanizing agent and optionally an accelerator agent, a retardant agent, a vulcanisation activating agent - and mixing the components at a temperature preferably lower than 120 °C, to give a cross-linkable elastomeric compound, and
- cross-linking the cross-linkable elastomeric compound, at a temperature preferably between 150 °C and 180 °C, to give the cross-linked elastomeric compound.

The process according to the invention typically comprises one or more thermomechanical mixing steps in at least one suitable mixer, in particular at least a first mixing step (step 1 - non-productive) and a second mixing step (step 2 - productive) as defined above.

Each mixing step may comprise several intermediate processing steps or sub-steps, characterised by the momentary interruption of the mixing to allow the addition of one or more ingredients but without intermediate dumping of the compound.

The mixing may be performed, for example, using an open mixer of the "open-mill" type or an internal mixer of the type with tangential rotors (Banbury®) or with interpenetrating rotors (Intermix), or in continuous mixers of the Ko-Kneader™ type (Buss®) or of the twin-screw or multi-screw type.

Generally, but not necessarily, at the end of step 1 the first elastomeric compound is unloaded and after a variable period it is reloaded in the same or another suitable mixer, for the subsequent productive step 2.

In productive step 2, the temperature is generally controlled to avoid undesired pre-vulcanisation phenomena.

At the end of the second step, the cross-linkable elastomeric compound is incorporated into one or more components of the green tyre and subjected to vulcanisation, according to known techniques.

Any of the usual vulcanisation processes may be used in the present process, such as heating in a press or mould, heating with superheated steam or hot air.

The tyre component comprising, preferably consisting of, the above cross-linked elastomeric compound is preferably selected from tread band, under-layer, anti-abrasive strip, sidewall, sidewall insert, mini-sidewall, liner, under-liner, rubber layers, bead filler, bead reinforcing layers (flipper), bead protection layers (chafer) and sheet. Preferably, the tyre component is a tread band.

The tyre for vehicle wheels of the invention comprises at least one of the components comprising a cross-linked elastomeric compound obtained by cross-linking the cross-linkable elastomeric composition described above. Preferably, said component is at least the tread band.

In one embodiment, a tyre for vehicles according to the present invention comprises at least

- a carcass structure comprising at least a carcass ply having opposite lateral edges associated to respective bead structure;
- optionally a pair of sidewalls applied to the lateral surfaces of the carcass structure, respectively, in an axially outer position;
- optionally a belt structure applied in radially outer position with respect to the carcass structure;
- a tread band applied in a radially outer position to said carcass structure or, if present, a belt structure,
- optionally a layer of elastomeric material, referred to as under-layer, applied in a radially inner position with respect to said tread band,

wherein at least one component, preferably the tread band, comprise, or preferably consist of, the present cross-linked elastomeric compound. In a preferred embodiment, the tyre component of the tyre according to the invention is the tread band.

In a preferred embodiment, the tyre according to the invention can be prepared by a process comprising:

(a) producing a raw tyre comprising a raw tread band applied at a radially outer position of the tyre;
(b) subjecting said raw tyre to moulding and vulcanization so as to obtain a finished tyre; in which said raw tread band comprises the cross-linkable elastomeric composition described above.

The tyre according to the invention may be for summer use. In alternative, the tyre according to the invention may be for winter and for all season use, depending on structural features and on the selection of the conjugated diene polymer (I) with a suitable Tg in the present cross-linkable elastomeric composition. In a preferred embodiment, the vehicle tyre of the invention is a winter tyre or snow tyre.

In one embodiment, the tyre according to the invention is a tyre for a passenger car, with normal or high performance or for off-road vehicles, preferably a tyre for passengers, conceived for vehicles for personal use, such as sedans, coupes, crossovers, SUVs, minivans and small pickups.

In one embodiment, the tyre according to the invention is a tyre for motorcycles, wherein at least one component comprises, or preferably consists of, the present cross-linked elastomeric compound.

The tyre according to the invention may be a tyre for two, three or four-wheeled vehicles.

In one embodiment, the tyre according to the invention is a tyre for bicycle wheels. A tyre for bicycle wheels typically comprises a carcass structure turned around a pair of bead cores at the beads and a tread band arranged in a radially outer position with respect to the carcass structure. Preferably, at least the tread band comprises the present cross-linked elastomeric compound.

The tyre for vehicles wheels may be built, formed, moulded and vulcanized with various methods known to the skilled in the art.

The tyre according to the present invention may be manufactured according to a process, which comprises:

- building components of a green tyre on at least one forming drum;
- shaping, moulding and vulcanising the tyre;

wherein building at least one of the components of a green tyre comprises:

- manufacturing at least one green component, preferably the tread band, comprising, or preferably consisting of, the present cross-linkable elastomeric compound.

DESCRIPTION OF A TYRE ACCORDING TO THE INVENTION

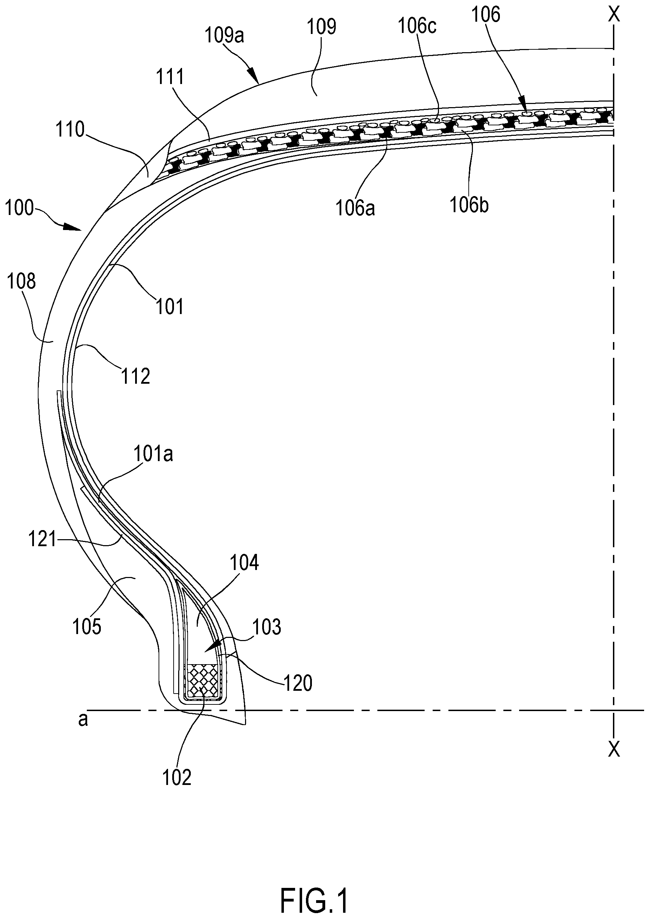

A tyre for vehicle wheels according to the invention, comprising at least one component comprising the present elastomeric compound, is illustrated in radial half-section in Figure 1.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

The tyre (100) for four-wheeled vehicles comprises at least one carcass structure, comprising at least one carcass layer (101) having respectively opposite end flaps engaged with respective annular anchoring structures (102), referred to as bead cores, optionally associated to a bead filler (104).

The tyre area comprising the bead core (102) and the filler (104) forms a bead structure (103) intended for anchoring the tyre onto a corresponding mounting rim, not shown.

The carcass structure is usually of radial type, i.e. the reinforcing elements of the at least one carcass layer (101) lie on planes comprising the rotational axis of the tyre and substantially perpendicular to the equatorial plane of the tyre. Said reinforcing elements generally consist of textile cords, such as rayon, nylon, polyester (for example polyethylene naphthalate, PEN). Each bead structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the bead structure can be provided by a second carcass layer, not shown in Figure 1, applied in an axially outer position with respect to the first carcass layer.

An anti-abrasive strip (105) optionally made with elastomeric material is arranged in an outer position of each bead structure (103).

The carcass structure is associated to a belt structure (106) comprising one or more belt layers (106a), (106b) placed in radial superposition with respect to one another and with respect to the carcass layer, having typically textile and/or metallic reinforcing cords incorporated within a layer of elastomeric material.

Such reinforcing cords may have crossed orientation with respect to a direction of circumferential development of the tyre (100). By "circumferential" direction it is meant a direction generally facing in the direction of rotation of the tyre.

At least one zero-degree reinforcing layer (106c), commonly known as a "0° belt", (106b), may be applied in a radially outermost position to the belt layers (106a), which generally incorporates a plurality of elongated reinforcing elements, typically metallic or textile cords, oriented in a substantially circumferential direction, thus forming an angle of a few degrees (such as an angle of between about 0° and 6°) with respect to a direction parallel to the equatorial plane of the tyre, and coated with an elastomeric material.

A tread band (109) comprising the present cross-linked elastomeric compound is applied in a position radially outer to the belt structure (106).

Moreover, respective sidewalls (108) of elastomeric material are applied in an axially outer position on the lateral surfaces of the carcass structure, each extending from one of the lateral edges of tread (109) at the respective bead structure (103).

In a radially outer position, the tread band (109) has a rolling surface (109a) intended to come in contact with the ground. Circumferential grooves, which are connected by transverse notches (not shown in Figure 1) so as to define a plurality of blocks of various shapes and sizes distributed over the rolling surface (109a), are generally made on this surface (109a), which in Figure 1 is represented smooth for simplicity.

An under-layer (111) of elastomeric material may be arranged between the belt structure (106) and the tread band (109).

A strip consisting of elastomeric material (110), commonly known as "mini-sidewall", can optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109).

In the case of tubeless tyres, a rubber layer (112), generally known as "liner", which provides the necessary gas tightness to the inflation air of the tyre, can also be provided in a radially internal position with respect to the carcass layer (101).

The rigidity of the tyre sidewall (108) may be improved by providing the bead structure (103) with a reinforcing layer (120) generally known as "flipper" or additional strip-like insert.

The flipper (120) is a reinforcing layer which is wrapped around the respective bead core (102) and the bead filler (104) so as to at least partially surround them, said reinforcing layer being arranged between the at least one carcass layer (101) and the bead structure (103). Usually, the flipper is in contact with said at least one carcass layer (101) and said bead structure (103).

The flipper (120) typically comprises a plurality of textile cords incorporated within a layer of elastomeric material.

The reinforcing annular structure or bead (103) of the tyre may comprise a further protective layer which is generally known by the term of "chafer" (121) or protective strip and which has the function of increasing the rigidity and integrity of the bead structure (103).

The chafer (121) usually comprises a plurality of cords incorporated within a rubber layer of elastomeric material. Such cords are generally made of textile materials (such as aramide or rayon) or metal materials (such as steel cords).

A layer or sheet of elastomeric material can be arranged between the belt structure and the carcass structure (not shown). The layer may have a uniform thickness. Alternatively, the layer may have a variable thickness in the axial direction. For example, the layer may have a greater thickness close to its axially outer edges with respect to the central (crown) zone. Advantageously, the layer or sheet may extend on a surface substantially corresponding to the extension surface of said belt structure.

In a preferred embodiment, a layer of elastomeric material, referred to as under-layer (111), may be placed between said belt structure and said tread band, said under-layer preferably extending on a surface substantially corresponding to the extension surface of said belt structure.

In the above preferred tyre according to the invention, the present cross-linked elastomeric compound may advantageously be incorporated in addition to the tread band in one or more of the other above tyre components.

The building of the tyre (100) as described above, may be carried out by assembling respective semi-finished products consisting of the respective green compounds, semi-finished products adapted to form the components of the tyre, on a forming drum, not shown, by at least one assembling device.

At least a part of the components intended to form the carcass structure of the tyre may be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve. After building of green tyre, a moulding and vulcanisation treatment is generally carried out in order to determine the structural stabilisation of the tyre through cross-linking of the elastomeric compositions, as well as to impart a desired tread pattern on the tread band and to impart any distinguishing graphic signs at sidewalls

The Applicant has found that by virtue of the characteristics of the cross-linkable elastomer composition described herein, it is possible to provide a tyre with an increased wear resistance that provides better driving performance either on snow/wet winter conditions or on wet/dry summer roads.

BRIEF DESCRIPTION OF THE DRAWINGS

Figure 1 schematically shows a semi-sectional view of a tyre for vehicle wheels according to the present invention;
Figure 2 shows the graphs of E' vs temperature (Figure 2A) and Tan D vs temperature (Figure 2B) of the compounds of Examples 1, 2, 4 to 8, comprising a diene polymer with a Tg $_{DSC}$ lower than -55 °C;
Figure 3 shows the graphs of E' vs temperature (Figure 3A) and Tan D vs temperature (Figure 3B) of the compounds of Example 3 (reference) and Example 7 (inventive), comprising a diene polymer with a Tg $_{DSC}$ higher than -55 °C.
Figure 4 illustrates the extrapolation of the Tg $_{DSC}$ onset and end temperatures from the DSC thermogram of an exemplary polymer.

EXPERIMENTAL PART

Unless otherwise stated, in the present Experimental Part the components of the composition are expressed in phr (parts per hundred of rubber).

Test methods

Properties of the polymers

Weight average molecular weight (Mw) and number average molecular weight (Mn)

Mw and Mn of the polymers were measured by Gel Permeation Chromatography (GPC) technique, with a system composed by a Waters HPLC equipment, Wyatt Multi Angle Light Scattering (MALS) and refractive index (RI) detectors. The chromatographic columns bank was made of three Shodex columns, 8.0 mm ID x 300 mm L (KF802.5+KF805+KF806). Thanks to the combined use of MALS and RI detectors there was no need for columns calibration. Polymer sample (10 mg) was dissolved in tetrahydrofuran (10 ml). The resulting solution was filtered using a 0.45 $\mu$m PTFE filter in a HPLC amber vial and was then analyzed for the determination of weight average molecular weight (Mw) and number average molecular weight (Mn). The analysis was performed according to the following conditions: mobile phase tetrahydrofuran (THF), eluent flow 1ml/min, temperature 30 °C.

Glass transition temperature of the reference polymers by DSC (Tg $_{DSC}$)

The glass transition temperature of the reference polymers A to C was determined by differential scanning calorimetry (DSC) using a DSC Mettler Toledo instrument under the following conditions. A test sample of weight between 5 mg and 20 mg was weighed and put without any treatment into a pan, the pan was sealed with cover and placed in the cell of the instrument set at 50 °C. The nitrogen gas flow was set at 80 ml/min. The sample was cooled to -120 °C at a cooling rate of 10 °C/min and then maintained at this temperature for 5 minutes. To determine the glass transition temperature the thermogram was recorded during the last heating step from -120 °C to +50 °C at a heating rate of 10 °C/min. The glass transition temperature was measured at the inflection point of the DSC curve (i.e. at the minimum value of the first derivative of the DSC thermogram line).

Glass transition temperature of the inventive polymers P1 - P4 by DSC (Tg $_{DSC}$)

When the inventive polymer was an oil-extended product, the extender oil was first extracted and only after the sample was subjected to measurement of the glass transition temperature in accordance with ISO 22768:2006 under the following conditions. The DSC thermogram was recorded with a "DSC 3200S" differential scanning calorimeter manufactured by MacScience, under a helium flow of 50 ml/minute by increasing the temperature from -120 °C to +40 °C at a heating rate of 10 °C/min.

The extrapolated glass transition onset temperature (Tg $_{DSC}$ onset) was determined as the temperature at the intersection of the straight line, obtained by extending the base line on the lower temperature side to the higher temperature side, and the tangent line drawn at the point where the gradient of the curve of the step-wise change portion of the glass transition reaches a maximum.

The extrapolated glass transition end temperature (Tg $_{DSC}$ end) was determined as the temperature at the intersection of the straight line, obtained by extending the base line on the higher temperature side to the lower temperature side, and the tangent line drawn at the point where the gradient of the curve of the step-wise change portion of the glass transition becomes maximum.

An example of a graphical extrapolation of Tg $_{DSC}$ and of Tg $_{DSC}$ onset /end temperatures is illustrated in Figure 4.

Calculated glass transition temperature (Tg $_{CALC}$)

The estimated glass transition temperatures of the styrene - butadiene polymers (I) used in the present experimental part (P1-P4) and of their segments were calculated using the approximated above equation (1A).

Total vinyl and styrene content in the conjugated diene (I)

Total vinyl ($Y_{all}$) and total styrene ($X_{all}$) content were measured by $^{1}$H-NMR according to ISO 21561-1:20015, with a NMR spectrometer BRUKER Avance (400 MHz) and a 5-mm dual probe, using $CDCl_3$ (purity higher than 99.8%) as solvent containing 0.03 % of tetramethyl silane (TMS) as internal standard.

Determination of the weight ratios r1 and r2 of the first polymer segment and the second polymer segment and of their R ratio

The amount of solids in the conjugated diene polymer (I) solution flowing through the measurement point during a unit of time was obtained from the amount of non-volatile components (solid residue) in the conjugated diene polymer (I) solution. The total amount of the conjugated diene polymer (I) solution flowing through the measurement point was sampled for 3 minutes and the polymerization terminator was immediately added. The sample was then transferred to a heat-resistant dish and dried in an oven at 140 °C for at least 30 minutes and the weight (wt) of the solid residue was measured. The amount of solid (wt) was determined by the following equation (2)

$$\text{solid amount wt [g/min]} = \text{solid amount wt [g/3 min]} : 3 \qquad (2)$$

Likewise, the solid amounts m1 and m2, respectively referring to the first and to the second polymer segments, were measured. The measurement points were the discharge portion of the polymerisation process 1 (PR1) for synthetizing the first polymer segment and the discharge portion of the polymerisation process 2 (PR2) for forming the second polymer segment.

The weight ratios r1, r2 of the first and the second polymer segment were determined according to the following equations (3) and (4):

First polymer segment ratio

$$r1\ [\%]: \frac{m1}{U+V} \times 100 \qquad (3)$$

Second polymer segment ratio

$$r_2\ [\%]: \frac{m2-m1}{U+V} \times 100 \qquad (4)$$

wherein the solid amounts m1 and m2 were obtained as explained above and U+V represents the sum of the weight of the conjugated diene (U) and the weight of the aromatic vinyl monomer (V) added per unit of time throughout the polymerisation process.

The ratio R of the polymer segments weight ratios is obtained from the following equation (5):

$$R = r1\ /\ r2 \qquad (5)$$

Determination of the content of bound monomer units in the polymer segments of the conjugated diene polymer (I) and of their difference (X1, X2, Y1, Y2, $\Delta X$, $\Delta Y$)

A sample of 100 mg of the polymer solution at the discharge portion of the polymerisation process PR1 for synthesising the first polymer segment was diluted to 100 ml with chloroform and dissolved to obtain a measurement sample.

The amount of bound styrene in the first polymer segment (X1) (wt%) with respect to 100% by weight of the first polymer segment was measured from the UV absorption of the phenyl group of styrene (at wavelength of about 254 nm, spectrophotometer "UV-2450" manufactured by Shimazu Corporation).

The amount of bound styrene in the second polymer segment (X2) was calculated from the following equation (6):

$$X2 = \frac{100\ X_{all} - r1X1}{r2} \qquad (6)$$

in which r1, r2, x1 and $X_{all}$ are determined as explained above.

The difference $|\Delta X|$ in the amount of bound styrene between the first polymer segment and the second polymer segment was determined according to the following equation (7):

$$\left|\Delta X\right| = |X1 - X2| \qquad (7)$$

The amount of vinyl unit in the first polymer segment (Y1) was determined as follows: 50 mg of a sample of the polymer solution at the discharge portion of the polymerisation process (PR1) for synthesising the first polymer segment was dissolved in 10 ml of carbon disulfide. The infrared spectrum of each sample was measured in the range of 600 to 1000 cm$^{-1}$ using a Fourier transform infrared spectrophotometer (trade name "FT-IR230" manufactured by JASCO Corporation).

The total amount of 1,2-vinyl units in the bound butadiene (mol%) of the conjugated diene polymer (I) was determined from the absorbance at a given wavenumber in accordance with the method described in Hampton's method (R. R. Hampton, Analytical Chemistry 21, 923 (1949)).

The amount of vinyl unit of the bound conjugated diene in the second polymer segment (Y2) (mol%) was calculated from the following equation (8) :

$$Y2 = \frac{100\ (100 - X_{all})Y_{all} - r1(100 - X1)Y1}{(100 - X2)\ r2} \qquad (8)$$

in which $X_{all}$, $Y_{all}$, r1, X1, Y1, X2 and r2 have the meanings and were determined as explained above.

The difference $\Delta Y$ in the amount of vinyl unit of the bound conjugated diene between the first polymer segment and the second polymer segment was determined by the following equation (9):

$$\Delta Y = Y2 - Y1 \qquad (9)$$

Modification rate

Modification rates of the inventive polymers P1-P4 were measured by a column adsorption GPC method as follows.

Using a modified conjugated diene polymer as a sample, the modification rate was measured by exploiting the characteristic adsorption of the modified polymer component to a GPC column packed with silica gel.

In details, the amount adsorbed by the silica column was measured from the difference between the chromatogram of the sample solution - containing a sample of the modified polymer and a low-molecular-weight internal standard polystyrene - measured on the polystyrene-based column and the chromatogram of the same sample solution measured on the silica column.

- Preparation of the sample solution: 10 mg of the sample and 5 mg of standard polystyrene were dissolved in 20 ml of THF (tetrahydrofuran) thus providing the sample solution.
- GPC measurement conditions using a polystyrene column: using the "HLC-8320GPC" manufactured by Tosoh Corporation and 5 mmol/l of triethylamine-containing THF as the eluent, 10 $\mu$l of the sample solution were injected into the device at column oven temperature of 40 °C and a THF flow rate of 0.35 ml/minute. Chromatograms were recorded using an RI detector.

Three "TSKgel SuperMultiporeHZ-H" columns manufactured by Tosoh Corporation were connected, and a "TSK guard column SuperMP (HZ)-H" manufactured by Tosoh Corporation was connected to the preceding stage and used.

- GPC measurement conditions using a silica column:
  The GPC measurement was taken using the "HLC-8320GPC" manufactured by Tosoh Corporation, an RI detector (trade name "HLC-8020" manufactured by Tosoh Corporation) and THF as eluent. 50 $\mu$l of the sample solution were injected into the device, at a column oven temperature of 40 °C and a THF flow rate of 0.5 ml/minute and chromatograms were recorded.
  Columns with trade names "Zorbax PSM-1000S", "PSM-300S" and "PSM-60S" were connected in this order, and a "DIOL 4.6x12.5 mm 5 micron" guard column was connected to the preceding stage and used.
- Modification rate calculation method: assuming the total peak area of the chromatogram using the polystyrene column was 100, the peak area of the sample was PA1, the peak area of the standard polystyrene was PA2, the total peak area of the chromatogram using the silica column was 100, the peak area of the sample was PA3, the peak area of the standard polystyrene was PA4, the modification rate (%) was obtained from the following equation (10):

$$\text{Modification rate (\%)} = [1 - (PA2 \times PA3)/(PA1 \times PA4)] \times 100 \qquad (10)$$

wherein PA1 + PA2 = PA3 + PA4 = 100.

Mooney viscosity and relaxation

The Mooney stress-relaxation rate (MSR) was determined according to standard ISO 289 with an Alpha Technologies MV2000 viscometer. At the end of the viscosity test at 100 °C, the rotation of the disc was stopped within 0.1 s, reset the zero torque point to the static zero for a stationary rotor and recorded the torque at least every 0.2 s. The relaxation data were collected starting 1.6 s and continuing up to 5.0 s after the rotor was stopped, giving normally a total of 18 data points.

Properties of cross-linkable elastomeric compounds

The green cross-linkable elastomeric compounds were subjected to the following evaluations:

Mooney viscosity and relaxation (same test described above)
MDR rheometric analysis: tests were carried out according to standard ISO 6502 with an MDR2000 Alpha Technologies rheometer, at 170 °C for 20 minutes, at an oscillation frequency of 1.66 Hz (100 oscillations per minute) and an oscillation amplitude of ± 0.5°, measuring the time required to reach 90% (T90) of the final torque. The maximum torque MH was also measured.

Properties of cross-linked compounds

After cross-linking (vulcanization), the elastomeric compounds were subjected to the following evaluations:

Density: density was measured in accordance with ISO2781 method A with an automatic Densitron - Alpha Technologies.
Static mechanical properties were measured at 23 °C in accordance with standard ISO 37:2005. Specifically, tensile stress at 300% of elongation (T300%), tensile stress at break TB and elongation at break EB were measured on samples of the elastomeric compounds, vulcanized at 170 °C for 10 minutes. Tensile tests were performed on ring-type specimens having a straight axis.
Hardness in IRHD (23 °C) was measured in accordance with standard ISO 48:2007, on samples of the elastomeric compounds vulcanized at 170 °C for 10 minutes.
Dynamic mechanical properties were measured using a dynamic Instron device in compression-tension operation according to the following methods.

E', E" moduli and Tan D

Samples of the raw elastomeric compounds, vulcanized at 170 °C for 10 minutes, having a cylindrical shape (length = 25 mm; diameter = 14 mm), pre-load compression up to 25% of longitudinal deformation compared to the initial length, kept at a preset temperature (-10 °C, 0 °C or 23 °C) for the entire test, were subjected to a dynamic sinusoidal deformation with an amplitude of ± 3.5% relative to the length under static pre-strain, at a frequency of 100 Hz.

The dynamic mechanical properties were expressed in terms of dynamic modulus of elasticity (E'), of tan delta or Tan D (dissipation factor or hysteresis) and of loss compliance D" (wet grip indicator). The value of Tan D was calculated as the ratio between the viscous modulus (E") and elastic modulus (E'). The value of D" was calculated as the ratio of Tan D and modulus E* (complex modulus E*=E' + iE").

Dynamic test by RPA (Rubber Process Analyzer)

This test was used to measures dynamic parameters of a cured compound and curing kinetic, Payne Effect ($\Delta$G') by Strain Sweep, G' and Tan delta at 9% of strain. The procedure included the following steps and conditions:

- vulcanizing the sample for 10 minutes at 170 ° C in dynamic conditions,
- waiting for 10 minutes, to ensure that the material recovered after vulcanization and reached the temperature of 70 ° C,
- Strain Sweeping from 0.3% to 10% at 10Hz and 70 °C
- Mechanical preconditioning of 100 cycles at 70 °C, 10Hz and 9% of strain ▪ Dynamic Characterization at 70 °C, 10Hz at 9% and 3% of strain.

Glass transition temperature (Tg) by Temperature Sweep

This technique was used for determining the glass transition temperature Tg (in tensile mode) of elastomeric compounds subjected to a sinusoidal oscillation at fixed amplitude (strain) and fixed frequency at increasing temperature.

The applied conditions were the following: initial temperature: -80 °C, final temperature: +30 °C, heating rate: 2 °C/min., pre-strain:3%, strain: 0.1%, frequency: 1Hz.

The results were reported as curves of storage modulus (E') and Tan D (ratio E"/E') versus temperature (see Figure 2 and Figure 3). The temperature at the peak of the Tan delta curve was the glass transition temperature (Tg) of the compound.

Abrasion resistance (LAT 100 under dry conditions)

Resistance to abrasion was determined according to ISO 23233:2009 by using a driven, vertical abrasive disc (LAT 100: Laboratory Abrasion Tester 100).

The test specimen was a solid wheel made of the vulcanized compound under test, which was run under load on a rotating abrasive disc at a slip angle to the direction of rotation. Loss in weight by abrasion was determined from the slip caused by setting different slip angles and rotational speeds between the wheel-shaped rubber test piece and the abrasive disc, rotating in planes at right angles to each other and pressed against each other with a specified load. The test result was reported as an abrasion resistance index (ARI).

The abrasion resistance index is defined as the abrasion loss in weight per unit running distance normalized on the reference compound (Ex. 1, Ex. 2 or Ex. 3 compounds) and was calculated according to the following equations (11) and (12):

$$A = \frac{wt_i - wt_f}{s} \tag{11}$$

$$ARI = \frac{A\ inv.}{A\ ref.} \times 100 \tag{12}$$

wherein A was the loss in weight per unit running distance in mg/km, $wt_i$ was the initial weight of the sample in mg, $wt_f$ was the final weight in mg, s was the running distance in km, A *inv.* and A *ref.* the loss in weight per unit running distance in mg/km for the inventive and reference compound respectively.

The lower was the abrasion resistance index (ARI), the better was the resistance to abrasion of the compound in comparison with the reference compound.

Grip on wet (LAT100 under wet conditions)

In this case, the surface of the rotating abrasive disc was wetted with water at different temperatures. The test measured the friction force (in Newton) which is directly proportional to the sliding resistance against the road wheel. The friction force, which determines the traction capability of a tread compound, depends on the compound viscoelastic properties, the contact temperature, the sliding speed and the composition of the road surface. The applied conditions were the following: temperature of water 2 °C, 8 °C, 15 °C; constant speed of the rotating abrasive disc of 0.4 Km/h; 0° speed angle, constant load 75 N, locked wheel.

The values of friction force were calculated as an average of four repetitions and normalized by setting to 100 the friction force of the reference compound (Ex. 1, Ex. 2 or Ex. 3).

The higher was the friction force the better was the wet grip of the test specimen.

Examples

The following examples are provided for the purpose of further illustrating the invention and should not be construed as a limitation.

Reference polymers

In the examples, A, B and C commercial reference polymers with different Tg and functional groups were used. These reference polymers were random styrene-butadiene solution copolymers with uniform Tg along polymer chains i.e. segments were absent, and sharp DSC glass transition temperature profiles. Polymer A was chain end functionalized; polymer B was di-functionalized; polymer C contained multiple functional groups.

These polymers were characterized as shown in Table 1 below:

Table 1

| Polymer | Mw | Mn | Styrene cont. | Vinyl cont. | TDAE | Tg $_{DSC}$ | Difference Tg $_{DSC}$ (end -onset) |
|---|---|---|---|---|---|---|---|
| | (g/mol) | (g/mol) | (wt%) | (mol%) | (phr) | (°C) | (°C) |
| Polymer A | 241,000 | 182,000 | 15 | 30 | 0 | -60.6 | 6.0 |
| Polymer B | 472,000 | 400,000 | 15 | 30 | 0 | -63.0 | 6.2 |
| Polymer C | 610,000 | 400,000 | 25 | 25.5 | 25 | --51.1 | 7.7 |
| Polymer A: SSBR commercial grade Sprintan SLR 3402 (Synthos); polymer B: SSBR commercial grade XB120 (Asahi Kasei); polymer C: SSBR commercial grade HPR 621, oil extended (Eneos). | | | | | | | |

Conjugated diene polymers (I) for the compositions of the tyre of the invention

In the following examples, polymers P1 - P4 comprising first and second polymer segments, were used for the compositions and compounds of the tyres of the invention. For conciseness, polymers P1-P4 suitable for manufacturing the tyre of the invention are herein named as "inventive polymers". The inventive polymers P1 - P3 had a Tg $_{DSC}$ suitable for winter or all season applications while polymer P4 had a Tg $_{DSC}$ suitable for summer use. The inventive polymers P1-P4 contained 5 phr of oil.

Preparation of the conjugated diene polymers (I)

Preparation of polymer P1

Two tank-type pressure vessels having a stirrer-equipped tank-type reactor and a jacket for temperature control were connected as polymerisation reactors, wherein the internal volume was 10 L, the ratio (L/D) of the internal height (L) to the diameter (D) was 4.0, and there was an inlet at the bottom and an outlet at the top.

The first polymerisation reactor was used to carry out the polymerisation process (PR1) for synthesising the first polymer segment. Previously dehydrated 1,3-butadiene, styrene and normal hexane were mixed at 20.3 g/minute, 4.31 g/minute and 173 g/minute, respectively. In a static mixer provided in the middle of a pipe for supplying this mixed solution to the inlet of the reaction group, 0.104 mmol/minute of n-BuLi for deactivation treatment of residual impurities was added, and after mixing was continuously fed to the bottom of the reactor. Furthermore, 2,2-bis(2-oxolanyl)propane as a polar substance and n-BuLi as a polymerisation initiator were supplied to the bottom of the first reactor at a rate of 0.0235 mmol/minute and a rate of 0.239 mmol/minute, respectively, and vigorously mixed with a stirrer, wherein the internal temperature of the reactor was maintained at 78 °C. When the polymerisation reaction was stabilised, the entire amount of the conjugated diene polymer was then withdrawn from the top of the reactor. After adding an antioxidant (BHT) at 0.2 g per 100 g of the conjugated diene polymer, the solvent was removed. Thereafter, the bound aromatic vinyl monomer unit amount ($X_1$) in the first polymer segment, the bound vinyl amount ($Y_1$) in the bound conjugated diene and the solid content concentration ($m_1$) were measured.

Next, the step of forming a second polymer segment (PR2) was carried out using a second polymerisation reactor. A conjugated diene polymer solution was continuously supplied from the top of the first reactor to the bottom of the second reactor. Furthermore, 1,3-butadiene, normal hexane and 2,2-bis(2-oxolanyl)propane as a polar substance were added to the second reactor at rates of 8.71 g/minute, 32.1 g/minute and 0.450 mmol/minute, respectively, while stirring, and the reaction was continued at 78 °C.

Next, in the modification step, as coupling agents, tetrakis(3-trimethoxysilylpropyl)-1,3-propanediamine (referred to as "coupling agent A" in the Table 2 below) and 1-methyl-4-[3-(trimethoxysilyl)propyl]piperazine (referred to as "coupling agent B" in the Table 2 below) were continuously added to the conjugated diene polymer solution flowing out from the top of the second reactor at rates of 0.0103 mmol/minute and 0.0965 mmol/minute, and a static mixer was used to mix and carry out the coupling reaction. At this time, the time until the coupling agents were added to the polymer solution flowing out from the outlet of the reactor was 4.8 minutes and the temperature was 68 °C.

The entire amount of the conjugated diene polymer solution was then withdrawn after the coupling reaction. After adding an antioxidant (BHT) at 0.2 g per 100 g of the conjugated diene polymer, the solvent was removed. Various molecular weights, the total amount of bound aromatic vinyl unit ($X_{all}$), the total amount of vinyl unit ($Y_{all}$) in the bound conjugated diene, the solid content concentration ($m_2$), and the glass transition temperature were measured.

Next, an antioxidant (BHT) was added to the conjugated diene polymer (I) solution after the coupling reaction in an amount of 0.2 g per 100 g of the polymer at a rate of 0.055 g/minute (n-hexane solution), and the coupling reaction was terminated.

At the same time as the antioxidant, SRAE oil (JOMO Process NC 140, manufactured by JX Nippon Oil & Energy Corporation) was added in an amount of 5.0 g per 100 g of polymer as a softening agent for rubber and mixed with a static mixer. The solvent was removed by steam stripping to obtain the modified conjugated diene polymer P1.

Preparation of polymer P2

The conjugated diene polymer P2 was obtained following the same procedure described above for the manufacture of polymer P1 with the following differences:

- the amount of 2,2-bis(2-oxolanyl)propane and the n-BuLi supplied to the first reactor and the 2,2-bis(2-oxolanyl)propane supplied to the second reactor were changed to 0.0271 mmol/minute, 0.297 mmol/minute and 0.461 mmol/minute, respectively;
- the amount of the coupling agent A and the coupling agent B added in the modification step were changed to 0.0125 mmol/minute and 0.1168 mmol/minute, respectively.

Preparation of polymer P3

The conjugated diene polymer P3 was obtained following the same procedure described above for the manufacture of polymer P1 with the following differences:

- the amount of 2,2-bis(2-oxolanyl)propane and the n-BuLi supplied to the first reactor and the 2,2-bis(2-oxolanyl)propane supplied to the second reactor were changed to 0.0190 mmol/minute, 0.187 mmol/minute, and 0.362 mmol/minute, respectively;
- the amount of the coupling agent A and the coupling agent B added in the modification step were changed to 0.0084 mmol/minute and 0.0783 mmol/minute, respectively.

Preparation of polymer P4

The conjugated diene polymer P4 was obtained following the same procedure described above for the manufacture of polymer P1 with the following differences:

- the amount of 1,3-butadiene and of styrene supplied to the first reactor and of 1,3-butadiene to be added to the second reactor was changed to 18.7 g/minute, 6.67 g/minute and 8.00 g/minute, respectively.

Preparation of polymer P5

The conjugated diene polymer P5 was prepared following the same procedure but with the amount specified in Table 2 below.

The conditions applied in the manufacture and the features of the polymers so obtained are summarized in the following Table 2:

Table 2

| | | | P1 | P2 | P3 | P4 | P5 |
|---|---|---|---|---|---|---|---|
| Polymerisation conditions | n-BuLi for processing | mmol / min | 0.104 | 0.104 | 0.104 | 0.104 | 0.114 |
| | Polymerisation initiator n-BuLi | mmol / min | 0.239 | 0.297 | 0.187 | 0.239 | 0.208 |
| | B added to reactor 1 | g/min | 20.3 | 20.3 | 20.3 | 18.7 | 21.6 |
| | S added to reactor 1 | g/min | 4.31 | 4.31 | 4.31 | 6.67 | 4.57 |
| | n-hexane added to reactor 1 | g/min | 173 | 173 | 173 | 173 | 153 |
| | Polar substance added to reactor 1 | mmol / min | 0.0235 | 0.0271 | 0.0190 | 0.0235 | 0.0209 |
| | Polymerisation temperature reactor 1 | °C | 78 | 78 | 78 | 78 | 78 |
| | B added to reactor 2 | g/min | 8.71 | 8.71 | 8.71 | 8.00 | 7.16 |
| | S added to reactor 2 | g/min | 0 | 0 | 0 | 0 | 0 |
| | n-hexane added to reactor 2 | g/min | 32.1 | 32.1 | 32.1 | 32.1 | 35.5 |
| | Polar substance added to reactor 2 | mmol / min | 0.450 | 0.461 | 0.362 | 0.450 | 0.396 |
| | Polymerisation temperature reactor 2 | °C | 78 | 78 | 78 | 78 | 78 |
| | Coupling agent A | mmol / min | 0.0103 | 0.0125 | 0.0084 | 0.0103 | 0.0092 |
| | Coupling agent B | mmol / min | 0.0965 | 0.1168 | 0.0783 | 0.0965 | 0.0086 |
| First polymer segment | Polymer segment weight ratio r1 | wt% | 62 | 62 | 62 | 62 | 66 |
| | Amount of bound SX1 | wt% | 12 | 12 | 12 | 19 | 12 |
| | Amount of vinyl unit Y1 | mol% | 20 | 19 | 19 | 20 | 21 |
| | Tg $_{CALC1}$ Equation (1A) | °C | -71.6 | -72.4 | -72.4 | -61.8 | -70.9 |
| Second polymer segment | Polymer segment weight ratio r2 | wt% | 38 | 38 | 38 | 38 | 34 |
| | Amount of bound S X2 | wt% | 14 | 14 | 14 | 22 | 17 |
| | Amount of vinyl unit Y2 | mol% | 58 | 58 | 58 | 58 | 58 |
| | Tg $_{CALC2}$ Equation (1A) | °C | -38.5 | -38.5 | -38.5 | -28.5 | -35.0 |

(continued)

|  | | | | P1 | P2 | P3 | P4 | P5 |
|---|---|---|---|---|---|---|---|---|
| Conjugated diene polymer (I) | Polymer segment weight ratio R=r1/r2 | - | | 1.63 | 1.63 | 1.63 | 1.63 | 1.94 |
| | Difference Tg $_{CALC2}$ - Tg $_{CALC1}$ | °C | | 33.1 | 33.9 | 33.9 | 33.3 | 14.3 |
| | Amount of bound S $X_{all}$ | wt% | | 13 | 13 | 13 | 20 | 14 |
| | Amount of vinyl unit $Y_{all}$ | mol% | | 34 | 34 | 34 | 32 | 29 |
| | difference of bound S between segments $|\Delta X= X1-X2|$ | wt% | | 2 | 2 | 2 | 3 | 5 |
| | difference of vinyl units between segments $\Delta Y=Y2 - Y1$ | mol% | | 38 | 39 | 39 | 38 | 37 |
| | Tg $_{CALC}$ Equation (1A) | °C | | -59.5 | -59.5 | -59.5 | -51.6 | -62.0 |
| | Weight average molecular weight Mw | $10^4$ g/mol | | 50.55 | 41.16 | 63.33 | 40.83 | 53.1 |
| | Number average molecular weight Mn | $10^4$ g/mol | | 33.94 | 24.30 | 41.13 | 28.68 | 37.8 |
| | Polydispersity index Mw/Mn | -- | | 1.49 | 1.69 | 1.54 | 1.42 | 1.40 |
| | Mooney viscosity (100°C, ML 1+4) | M.U. | | 69 | 52 | 90 | 67 | 112 |
| | Extr. Tg $_{DSC}$ onset temperature | °C | | -67.9 | -68.0 | -68.0 | -59.3 | -68.2 |
| | Extr. Tg $_{DSC}$ end temperature | °C | | -54.4 | -54.3 | -54.3 | -46.9 | -53.9 |
| | Tg $_{DSC}$ | °C | | -60.8 | -60.8 | -60.8 | -52.0 | -60.9 |
| | Difference extr. Tg $_{DSC}$ end - onset temperature | °C | | 13.5 | 13.7 | 13.7 | 12.4 | 14.3 |
| | Modification rate | % | | 77.2 | 79.0 | 74.0 | 75.0 | 83.0 |
| Keys: S: styrene; B: 1,3-butadiene; n-BuLi: n-butyl lithium; extr.: extrapolated. | | | | | | | | |

Compositions and compounds (Examples 1-7)

Reference compositions and the corresponding compounds were prepared by using the polymers A (S-SBR, SLR 3402, Example 1), B (S-SBR, XB120, Example 2), C (S-SBR, HPR 621, Example 3). Compositions and compounds for the tyre of the invention were manufactured with the inventive polymers P1 (Example 4), P2 (Example 5), P3 (Example 6), P4 (Example 7) and P5 (Example 8).

The recipes of the compositions are shown in the following Table 3:

Table 3 (all amounts in phr)

| | Ex. 1 | Ex. 2 | Ex. 3 | Ex. 4 | Ex. 5 | Ex. 6 | Ex.7 | Ex. 8 |
|---|---|---|---|---|---|---|---|---|
| | Ref. | Ref. | Ref. | Inv. | Inv. | Inv. | Inv. | Inv. |
| Polymer A | 100 | -- | -- | -- | -- | -- | -- | -- |
| Polymer B | -- | 100 | -- | -- | -- | -- | -- | -- |
| Polymer C | -- | -- | 100 (125) | -- | -- | -- | -- | -- |
| Polymer P1 | -- | -- | -- | 100 (105) | -- | -- | -- | -- |
| Polymer P2 | -- | -- | -- | -- | 100 (105) | -- | -- | -- |
| Polymer P3 | -- | -- | -- | -- | -- | 100 (105) | -- | -- |

(continued)

|  | Ex. 1 | Ex. 2 | Ex. 3 | Ex. 4 | Ex. 5 | Ex. 6 | Ex.7 | Ex. 8 |
|---|---|---|---|---|---|---|---|---|
|  | Ref. | Ref. | Ref. | Inv. | Inv. | Inv. | Inv. | Inv. |
| Polymer P4 | -- | -- | -- | -- | -- | -- | 100 (105) | -- |
| Polymer P5 | -- | -- | -- | -- | -- | -- | -- | 100 (105) |
| TDAE oil | 40 | 40 | 15 | 35 | 35 | 35 | 35 | 35 |
| Carbon black | 2 | 2 | 2 | 2 | 2 | 2 | 2 | 2 |
| Silica | 85 | 85 | 85 | 85 | 85 | 85 | 85 | 85 |
| Silane TESPT | 6.8 | 6.8 | 6.8 | 6.8 | 6.8 | 6.8 | 6.8 | 6.8 |
| Wax | 1.25 | 1.25 | 1.25 | 1.25 | 1.25 | 1.25 | 1.25 | 1.25 |
| Stearic acid | 2 | 2 | 2 | 2 | 2 | 2 | 2 | 2 |
| Zinc oxide | 2.4 | 2.4 | 2.4 | 2.4 | 2.4 | 2.4 | 2.4 | 2.4 |
| 6-PPD | 3.5 | 3.5 | 3.5 | 3.5 | 3.5 | 3.5 | 3.5 | 3.5 |
| TBBS | 2.5 | 2.5 | 2.5 | 2.5 | 2.5 | 2.5 | 2.5 | 2.5 |
| TBZTD | 0.5 | 0.5 | 0.5 | 0.5 | 0.5 | 0.5 | 0.5 | 0.5 |
| Sulphur | 1 | 1 | 1 | 1 | 1 | 1 | 1 | 1 |
| Total dry polymer | 100 | 100 | 100 | 100 | 100 | 100 | 100 | 100 |
| Total oil (extender + free oil) | 40 | 40 | 40 | 40 | 40 | 40 | 40 | 40 |

wherein:

in round brackets phr of extended polymer (dry polymer + oil) are reported TDAE Treated Distillate Aromatic Extract oil: Vivatec 500 (Hansen & Rosenthal KG);
Carbon black: N234 (Birla Group);
Silica: Ultrasil 7000 GR (Evonik Industries AG);
Silane TESPT: bis(3-triethoxysilylpropyl)tetrasulphide - Si69 (Evonik Industries AG);
Wax: Riowax bm-01 (SER S.p.A.);
Stearic acid: Radiacid 444 (Oleon NV);
Zinc oxide: (Norzinco GmbH);
6-PPD: phenyl-p-phenylenediamine (Flexsys);
TBBS: N-tert-butylbenzothiazole-2-sulphenamide (RDC);
TBZTD: Tetrabenzylthiuram disulfide;
Sulphur: Soluble sulphur (ZOLFINDUSTRIA).

The above compositions were compounded in a standard two-step compound process by kneading in an internal lab mixer (Banbury rotor type) with a total chamber volume of 1100 cm$^3$. The first mixing step was performed at an initial temperature of 40 °C. After adding the polymer, the filler and all other ingredients but the curing system, the rotor speed of the internal mixer was set in order to reach a temperature between 145 °C - 160 °C and kept at that temperature for 4 min. so that the silanization reaction could complete. Total mixing time for the first step was 2'30". After dumping the compound, the mixture was cooled down and stored before adding the curing system in the second mixing step. The second mixing step was carried out on the compound from the first mixing step for a total time of 2'15", at an initial temperature of 50 °C, in the same equipment, after addition of sulphur as vulcanizing agent, TBBS and TBZTD as accelerators.

Compounds properties

Table 4 and Table 5 below set out the results of the static, rheometric and dynamic mechanical properties for cross-linked samples of the polymer compositions according to Examples 1 to 8:

Table 4

|  |  | Ex.1 | Ex.2 | Ex.4 | Ex.5 | Ex.6 | Ex.8 | Ex.3 | Ex.7 |
|---|---|---|---|---|---|---|---|---|---|
|  |  | Ref. | Ref. | Inv. | Inv. | Inv. | Inv. | Ref. | Inv. |
|  |  | A | B | P1 | P2 | P3 | P5 | C | P4 |
| Polymer Tg $_{DSC}$ | °C | -60.6 | -63.0 | -60.8 | -60.8 | -60.8 | -60.9 | -51.1 | -52.0 |
| Compound Tg $_{Temp\ sweep}$ | °C | -46.0 | -46.0 | -42.5 | -41.5 | -42.0 | -41.0 | -40.0 | -34.5 |
| Density | g/cm$^3$ | 1.183 | 1.184 | 1.184 | 1.186 | 1.184 | 1.185 | 1.196 | 1.193 |
| Mooney ML (1 + 4) | MU | 88 | 85 | 78 | 65 | 86 | 101 | 91 | 73 |
| MH | dN m | 23.5 | 19.2 | 16.3 | 15.7 | 18.6 | 17.9 | 18.5 | 15.8 |
| $t_{90}$ | min | 3.9 | 4.0 | 4.3 | 4.3 | 4.5 | 4.9 | 4.4 | 3.8 |
| T 300% | MPa | 10.5 | 12.7 | 11.42 | 11.1 | 11.1 | 12.1 | 12.8 | 11.6 |
| TB | MPa | 16.9 | 16.8 | 16.7 | 15.8 | 15.6 | 18.6 | 18.6 | 17.5 |
| EB | MPa | 451 | 406 | 426 | 414 | 413 | 427 | 420 | 426 |
| Energy at break | J/cm$^3$ | 29 | 29 | 29 | 26 | 26 | 32 | 32 | 30 |
| Hardness IRHD | 23°C | 72 | 72 | 67 | 63 | 67 | 66 | 69 | 64 |
| Key: T 300%: tensile at 300% of elongation; TB: tensile at break; EB: elongation at break; energy: energy recorded at break. | | | | | | | | | |

The performance of each inventive compound was evaluated in comparison with the reference compound comprising a polymer with a similar Tg $_{DSC}$ (i.e. inventive compounds of Ex. 4, Ex. 5, Ex. 6 and Ex. 8 were compared to reference compounds of Ex. 1 and Ex. 2 while inventive compound of Ex. 7 with reference compound of Ex. 3).

Regarding the properties of the compounds comprising a polymer with a Tg $_{DSC}$ lower than -55 °C (reference compounds of Ex. 1 and Ex. 2, inventive compounds of Ex. 4, Ex. 5, Ex. 6 and Ex. 8) shown in Table 4 above, it appeared that:

- the inventive compounds of Ex. 4, Ex. 5 and Ex. 6, comprising the inventive polymers P1, P2, P3, showed a lower or similar Mooney viscosity compared to the reference compounds of Ex. 1 and Ex. 2, comprising polymer A and B respectively, thus denoting a good compound processability; the inventive compound of Ex. 8, comprising of the inventive polymer P5, showed a higher Mooney viscosity compared to the reference compounds of Ex. 1 and Ex. 2 but still within a processable range;
- the mechanical properties (T300%, TB, EB and energy) of the inventive compounds were in line with those of the reference compounds;
- the vulcanization kinetic of the inventive compounds, in particular T90, was comparable to that of the reference compounds; MH of the inventive compounds was lower than MH of reference compounds, possibly due to a more effective filler dispersion (lower Payne effect);
- the inventive compounds advantageously had a lower hardness, meaning for the tyre an increased rubber-asphalt physical contact, thus leading in turn to an improved grip.

Regarding the properties of the compounds comprising polymers characterized by a Tg $_{DSC}$ higher than -55.0 °C (reference compound of Ex. 3 and inventive compound of Ex. 7) shown in Table 4 above, it appeared that:

- the inventive compound of Ex. 7 comprising the inventive polymer P4, showed lower Mooney viscosity compared to the reference compound of Ex. 3 comprising polymer C, thus showing a better compound processability;
- the mechanical properties (T300%, TB, EB and energy) of the inventive compound were in line with those of the reference compound.

Table 5

| | | Ex.1 | Ex.2 | Ex.4 | Ex.5 | Ex.6 | Ex.8 | Ex.3 | Ex.7 |
|---|---|---|---|---|---|---|---|---|---|
| | | Ref. | Ref. | Inv. | Inv. | Inv. | Inv. | Ref. | Inv. |
| | | A | B | P1 | P2 | P3 | P5 | C | P4 |
| Polymer Tg $_{DSC}$ | °C | -60.6 | -63.0 | -60.8 | -60.8 | -60.8 | -60.9 | -51.1 | -52.0 |
| Compound Tg $_{Temp\ sweep}$ | °C | -46.0 | -46.0 | -42.5 | -41.5 | -42.0 | -41.0 | -40.0 | -34.5 |
| ΔG' (0.4-10) MPa | 70°C | 1.33 | 0.94 | 0.72 | 0.61 | 0.81 | 0.75 | 1.12 | 0.73 |
| G' (9%) MPa | 70°C | 1.86 | 1.78 | 1.49 | 1.39 | 1.56 | 1.52 | 1.71 | 1.50 |
| Tan D (9%) | 70°C | 0.134 | 0.133 | 0.129 | 0.141 | 0.127 | 0.122 | 0.127 | 0.133 |
| E' 100 Hz MPa | -10°C | 11.8 | 11.8 | 11.7 | 11.4 | 11.6 | 11.6 | 12.7 | 13.0 |
| Tan D 100Hz | -10°C | 0.447 | 0.429 | 0.520 | 0.537 | 0.525 | 0.552 | 0.573 | 0.641 |
| E' 100 Hz MPa | 0°C | 10.0 | 9.9 | 9.5 | 9.3 | 9.4 | 9.3 | 10.4 | 10.3 |
| Tan D 100 Hz | 0°C | 0.335 | 0.311 | 0.393 | 0.406 | 0.401 | 0.425 | 0.442 | 0.501 |
| E' 100 Hz MPa | 23°C | 8.2 | 8.2 | 7.4 | 6.9 | 7.4 | 7.2 | 8.2 | 7.4 |
| Tan D 100 Hz | 23°C | 0.185 | 0.165 | 0.211 | 0.220 | 0.220 | 0.232 | 0.229 | 0.249 |

Regarding the properties of the compounds comprising a polymer with a Tg $_{DSC}$ lower than -55 °C (reference compounds of Ex.1 and Ex. 2, inventive compounds of Ex. 4, Ex. 5, Ex. 6 and Ex. 8) shown in Table 5 above, it appeared that:

- ΔG', G', Tan D (9%): the Payne Effect (ΔG') was lower for all the inventive compounds of Ex. 4 to Ex. 6 compared to reference compounds of Ex. 1 and Ex. 2, indicating that the dispersion of the filler into the polymer matrix was better for the inventive compounds. The inventive compounds also showed lower values of G' (9%) at 70 °C, denoting a better interaction of the inventive polymers P1-P3 and P5 with silica compared to the reference polymer B. Tan D (9%) at 70 °C of the inventive compounds was in line with the values of the reference compounds, predicting a similar tyre rolling resistance;
- E', Tan D at -10 °C / 0 °C (snow/wet performance): regarding these dynamic properties the behaviour at low temperatures (snow, wet grip) of the inventive compounds of Ex. 4 to Ex. 6 and Ex. 8 was better than the reference compounds of Ex. 1 and Ex. 2 since they show similar or even lower stiffness (E') and a significant increase of the hysteresis (Tan D). This combination of a lower stiffness with higher hysteresis was predictive of a better grip in winter applications.

The viscoelastic properties i.e. the elastic modulus E' and the hysteresis Tan D over temperature, of the compounds of Ex. 1, Ex. 2 (reference), Ex. 4, Ex. 5, Ex. 6 and Ex. 8 (inventive) were measured by Temperature Sweep experiment and reported in the graphs of Figure 2A and Figure 2B.

For the inventive compounds of Ex. 4, Ex. 5 and Ex. 6 a smoother increase of the stiffness (E') with respect to reference compounds as temperature decreases from -30 °C to -50 °C was observed (Figure 2A), as well as a broadening of the Tan D peak with higher Tan D values from -30 °C to +30 °C (Figure 2B). Instead, the reference compounds of Ex. 1 and Ex. 2 showed a sharp E' increase (Figure 2A) and a narrow Tan D peak profile (Figure 2B). The combination for the inventive compounds of a smoother E' increase together with a broader Tan D peak in the range of T -30/+30 °C was predictive of a higher wet grip.

The broadening of the Tan D curve observed for the compounds with inventive polymers P1, P2, P3 and P5 can be attributed to the Tg gap between the two polymer segments (see Difference Tg $_{CALC2}$ - Tg $_{CALC1}$ in Table 2).

Regarding the properties of the compounds comprising a polymer with a Tg $_{DSC}$ higher than -55.0 °C (reference compound of Ex. 3 and inventive compound of Ex. 7) shown in Table 5 above, it appeared that:

- ΔG', G', Tan D (9%): the Payne Effect (ΔG') was much lower for the inventive compound of Ex. 7 (polymer P4) respect to the reference compound of Ex. 3 (reference polymer C), meaning that the dispersion of the filler into the polymer matrix was better for the inventive compound that also showed lower value of G' (9%) at 70 °C. Tan D (9%) at 70 °C of the inventive compound (Ex. 7, polymer P4) was similar to that of reference compound (Ex.3, polymer C), predictive of a similar rolling resistance;

- E', Tan D at -10 °C / 0 °C (snow/wet performance): the dynamic properties of the inventive compound of Ex. 7 (polymer P4) showed that for similar stiffness (E') at low temperatures, hysteresis (Tan D) was much higher than the reference compound of Ex. 3 (polymer C), predicting an improved grip.

The viscoelastic properties i.e. the elastic modulus E' and the hysteresis Tan D over temperature, of the compound of Ex. 3 (reference) and Ex. 7 (inventive) were measured by Temperature Sweep experiment and reported in the graphs of Figure 3A and Figure 3B. For the inventive compound (Ex. 7, polymer P4) a moderately higher stiffness (E') with a comparable slope (Figure 3A) was observed while the Tan D curve profile was flattened and slightly broader compared to reference compound (Ex. 3, polymer C).

Table 6 below shows the snow, wet and wear Key Performance Indicators (KPI) for cross-linked samples of the polymer compositions according to Examples 1-7.

Table 6

| Performance | Parameter | Ex.1 | Ex.2 | Ex.4 | Ex.5 | Ex.6 | Ex.3 | Ex.7 |
|---|---|---|---|---|---|---|---|---|
| | | Ref. | Ref. | Inv. | Inv. | Inv. | Ref. | Inv. |
| | | A | B | P1 | P2 | P3 | C | P4 |
| Polymer Tg $_{DSC}$ | °C | -60.6 | -63.0 | -60.8 | -60.8 | -60.8 | -51.1 | -52.0 |
| Compound Tg $_{Temp\ sweep}$ | °C | -46 | -46 | -42.5 | -41.5 | -42 | -40 | -34.5 |
| Wet grip [a] | D" (100Hz 0°C) | 3.1 | 2.8 | 3.7 | 3.5 | 3.4 | 3.5 | 3.9 |
| | Friction force (LAT100 wet [c]) | 100 | 100 | >100 | >100 | >100 | 100 | 100 |
| Snow grip [a] | D" (100Hz -10°C) | 3.2 | 3.1 | 3.5 | 3.7 | 3.5 | n. r. | n. r. |
| Wear [b] | ARI (LAT100 dry) | 100 | 100 | 95 | 100 | 90 | 100 | 95 |
| [a] the higher, the better; [b] the lower, the better; [c] T=2-15 °C; ARI: abrasion resistance index; n.r. not relevant. | | | | | | | | |

The performance of each inventive compound was evaluated in comparison with the reference compounds comprising a polymer with a similar Tg $_{DSC}$ (i.e. inventive compounds of Ex. 4, Ex. 5 and Ex. 6 were compared to reference compounds of Ex. 1 and Ex.2 while inventive compound of Ex. 7 with reference compound of Ex. 3).

Regarding the properties of the compounds comprising polymers with a Tg $_{DSC}$ lower than - 55.0 °C (reference compounds of Ex. 1 and Ex. 2, inventive compounds of Ex. 4, Ex. 5 and Ex. 6) shown in Table 6 above, wet grip indicators (D" and LAT100 wet) were used to predict wet performance depending on specific test conditions. In particular, wet grip indicator D" (Tan D/E*) at 0 °C 100Hz was higher for all the inventive compounds of Ex. 4 - Ex. 6 comprising polymers P1 - P3 compared to reference compounds of Ex. 1 and Ex. 2. Higher D" (at 0 °C 100Hz) is predictive of improved wet grip since elevated hysteresis (Tan D), associated to high mobility of polymer chains, and low stiffness are beneficial for low temperature wet performance.

LAT100 (wet): the friction coefficient of reference compounds (Ex. 1 and Ex. 2) was set to 100. In the temperature range of 2-15 °C, the friction coefficient of the inventive compounds (Ex. 4 to Ex. 6) was higher than the reference predicting an improved wet grip. Concerning wear, assessed by LAT100 (dry conditions) test, the weight loss of the reference compounds of Ex.1 and Ex.2 was set at 100 (reference wear index). An improvement of 10% or higher of the weight loss was considered to be very significant in terms of impact on wear performance while values below 5% provided minimal abrasion reduction in the tyre.

The performance in terms of wear of the inventive compounds of Ex. 4 to Ex. 6 was different and directly related to the molecular weight of the polymers.

In particular, P2 had the lowest molecular weight and the wear performance of the corresponding compound of Ex. 5 was similar to that of the reference compounds of Ex. 1 and Ex. 2 (polymers A and B) while P1, having a MW higher than P2, indeed provided a 5% improvement of the wear index (Ex. 4 vs Ex.1 / Ex. 2). Finally, P3 characterized by the highest molecular weight, provided the best wear performance (10% of improvement of Ex. 6 compound compared to references).

Regarding the properties of the compounds comprising polymers with a Tg $_{DSC}$ higher than -55.0 °C (reference compound of Ex. 3 and inventive compound of Ex. 7) shown in Table 6 above, it appeared that:

Wet indicator D" (Tan D / E*) at 0 °C 100Hz was higher for the inventive compound of Ex. 7 (polymer P4) compared to reference compound of Ex. 3, predicting an improved wet grip.

LAT100 wet: normalized friction coefficient values, in the range of temperature of 2-15 °C, of the inventive compound (Ex. 7) compared to reference compound (Ex. 3) were similar. Finally, LAT100 (dry) wear test provided a normalized wear index for the inventive compound of Ex. 7 (polymer P4) improved of 5% compared to reference compound (Ex. 3) (i.e. a reduction of 5% of weight loss).

In conclusion, the experimental part above demonstrates that a cross-linkable elastomeric composition with a peculiar combination of physical properties was obtained by using the conjugated diene polymer (I) with the characteristics previously described. The main advantageous properties of the elastomeric compounds prepared from the above elastomeric compositions were a smoother increase of stiffness (E') as temperature decreases, a broader hysteresis curve over the temperature range -30 °C / +30 °C with increased grip indicator (D"), a proper level of mechanical properties (T300%, TB, EB, Energy at break) and an optimum filler dispersion (reduced Payne effect and hardness). By properly choosing the conjugated diene polymer (I) in terms of Tg and Mw it was possible to optimize the overall compound performance either for winter application (snow and wet grip indicators) or summer application (wet grip and RR indicators), while simultaneously improving wear rate performance for both applications.

## Claims

1.  A vehicle wheel tyre comprising at least a tyre component comprising a cross-linked elastomeric compound obtained by cross-linking a cross-linkable elastomeric composition, wherein said cross-linkable elastomeric composition comprises at least a conjugated diene polymer (I) comprising bound conjugated diene monomer units and, optionally, bound aromatic vinyl monomer units, said conjugated diene polymer (I) comprising at least a first polymer segment and at least a second polymer segment, wherein:

    Y1 (mol%) is the amount of vinyl unit in the bound conjugated diene monomer unit of the first polymer segment, Y2 (mol%) is the amount of vinyl unit in the bound conjugated diene monomer unit of the second polymer segment, and Y2 -Y1 (mol%) is from 15% to 50%;
    if bound aromatic vinyl monomer units are present, X1 (wt%) is the amount of bound aromatic vinyl monomer unit in the first polymer segment, X2 (wt%) is the amount of bound aromatic vinyl monomer unit in the second polymer segment, and IX1 - X2| (wt%) is at most 5%; and wherein

    i) the calculated glass transition temperature of the conjugated diene polymer (I) (Tg $_{CALC}$) is from -75.0°C to -30.0°C, preferably from -72.0 °C to -40.0 °C, and/or
    ii) in the conjugated diene polymer (I), the calculated glass transition temperature of the first polymer segment (Tg $_{CALC1}$) is lower than the calculated glass transition temperature of the second polymer segment (Tg $_{CALC2}$),

    said calculated glass transition temperatures being determined according to the Gordon - Taylor equation.

2.  The tyre according to claim 1 wherein said bound aromatic vinyl monomer units are present in both the polymer segments.

3.  The tyre according to claim 1 or 2 wherein the calculated glass transition temperature (Tg $_{CALC}$) is from -75.0°C to -30.0°C, preferably from -72.0 °C to -40.0 °C, more preferably at least -70.0 °C, at least -68 °C and preferably at most -42.0 °C, more preferably at most -44.0 °C.

4.  The tyre according to any one of previous claims wherein:

    - the conjugated diene monomer unit is selected from 1,3-butadiene, isoprene, 2,3-dimethyl-1,3-butadiene, 1,3-pentadiene, 3-methyl-1,3-pentadiene, 1,3-hexadiene, 1,3-heptadiene and mixtures thereof, preferably is 1,3 butadiene, and
    - the aromatic vinyl monomer unit, if present, is selected from styrene, p-methylstyrene, α-methylstyrene, vinylethylbenzene, vinylxylene, vinylnaphthalene, diphenylethylene and mixtures thereof, preferably is styrene.

5.  The tyre according to any one of previous claims wherein the conjugated diene polymer (I) is **characterized by** one or more of the following features:

    - the aromatic vinyl monomer unit, preferably styrene unit, is present and preferably the conjugated diene monomer unit is 1,3-butadiene;

- the calculated glass transition temperature of the first polymer segment (Tg $_{CALC1}$) is lower than the calculated glass transition temperature of the second polymer segment (Tg $_{CALC2}$), said calculated glass transition temperatures being determined according to the Gordon-Taylor equation;
- the % ratio of the sum of the weights of the first and second polymer segments to the total weight of the conjugated diene polymer (I) is higher than 70%, preferably higher than 80 % and more preferably higher than 90%;
- the ratio R = r1/r2, wherein r1 is the weight ratio of the first polymer segment and r2 is the weight ratio of the second polymer segment in the conjugated diene polymer (I), is from 0.25 to 4.00, preferably from 1.00 to 3.00, more preferably from 1.50 to 2.40;
- the aromatic vinyl unit is present and the amount of aromatic vinyl unit in the first polymer segment X1 (wt%) and in the second polymer segment X2 (wt%) is at least 5 wt%, preferably at least 7 wt%, more preferably at least 9 wt% and at most 30 wt%, preferably at most 25 wt%, more preferably at most 23 wt% in the respective polymer segment;
- the absolute value of the difference (|X1-X2|) between the amount of bound aromatic vinyl monomer X1 (% by weight) of the first polymer segment and the amount of bound aromatic vinyl monomer X2 (% by weight) of the second polymer segment is at most 3 wt%, more preferably at most 2.5 wt%;
- the amount of vinyl unit Y1 (mol%) in the bound conjugated diene of the first polymer segment is at least 14 mol%, preferably at least 16 mol%, more preferably at least 17 mol% and at most 40 mol%, preferably at most 35 mol%, more preferably at most 30 mol%, still more preferably at most 23 mol%;
- the amount of the vinyl unit Y2 (mol%) in the bound conjugated diene of the second polymer segment is at least 40 mol%, preferably at least 45 mol%, more preferably at least 50 mol%, still more preferably at least 55 mol% and at most 65 mol%, preferably at most 62 mol%, more preferably at most 61 mol%;
- the difference (Y2-Y1) between the amount of vinyl unit Y2 (mol %) in the bound conjugated diene of the second polymer segment and the amount of vinyl unit Y1 (mol %) in the bound conjugated diene of the first polymer segment is from 20 mol% to 45 mol%, preferably from 25 mol% to 45 mol%.

6. The tyre according to any one of previous claims wherein in the conjugated diene polymer (I), the aromatic vinyl monomer unit is present and is styrene, the conjugated diene monomer unit is butadiene and the Tg $_{CALC}$ of the conjugated diene polymer (I), which is from -75.0°C to -30.0°C, preferably from -72.0 °C to -40.0 °C, is calculated with the approximated equation (1A):

$$Tg_{CALC} = \frac{-5750 + 95X_{all} + 52\,Y_{all} - 0.52\,X_{all}\,Y_{all}}{56 - 0.2\,X_{all} - 0.1\,Y_{all}} \qquad (1A)$$

wherein $X_{all}$ (wt%) is the total amount of bound aromatic vinyl monomer unit in the conjugated diene polymer (I) and $Y_{all}$ (mol%) is the total amount of vinyl unit in the bound conjugated diene monomer unit of the conjugated diene polymer (I).

7. The tyre according to any one of the previous claims wherein the conjugated diene polymer (I) has a glass transition temperature Tg $_{DSC}$, measured according to the DSC method of ISO 22768:2006, is from -75.0°C to -30.0°C, preferably from -72.0 °C to -40.0 °C.

8. The tyre according to claim 7 wherein the glass transition the conjugated diene polymer (I), measured according to the DSC method of ISO 22768:2006, has an extrapolated Tg $_{DSC}$ onset temperature and an extrapolated Tg $_{DSC}$ end temperature which differ more than 10.0 °C and less than 15.0 °C.

9. The tyre according to any one of the previous claims wherein the conjugated diene polymer (I) has:

   - a weight average molecular weight (Mw) of at least 350,000 g/mol, preferably at least 400,000 and preferably at most 1,350,000 g/mol or at most 1,000,000 g/mol, more preferably at most 950,000 g/mol, even more preferably at most 800,000 g/mol, 750,000 g/mol or 650,000 g/mol, and/or
   - a number average molecular weight (Mn) of at least 100,000 g/mol, preferably at least 150,000 g/mol, more preferably at least 200,000 g/mol and at most 1,000,000 g/mol, preferably at most 700,000 g/mol, more preferably at most 500,000 g/mol, said Mw and Mn being measured by GPC, and / or
   - a polydispersity index (Mw/Mn) of at least 1.30, preferably at least 1.40, and at most 2.20, preferably at most 2.00.

10. The tyre according to any one of the previous claims wherein the conjugated diene polymer (I) comprises a nitrogen containing modifying group and has a modification rate of at least 60%, preferably of at least 65%, more preferably of at least 70%.

11. The tyre according to any one of the previous claims wherein the conjugated diene polymer (I) is **characterized by** one or more, preferably by all, the following features:

   - the conjugated diene monomer unit is selected from 1,3-butadiene, isoprene and their admixtures, preferably is 1,3-butadiene;
   - the aromatic vinyl monomer unit is present and is styrene;
   - the % ratio of the sum of the weights of the first and second polymer segments to the total weight of the conjugated diene polymer (I) is higher than 90 %;
   - the ratio R = r1/r2 of the first to the second polymer segment is from 1.50 to 2.40,
   - the absolute value of the difference (|X1-X2|) is at most 2.5 wt%;
   - the difference (Y2-Y1) is from 25 mol% to 45 mol%;
   - the difference between Tg $_{CALC2}$ and Tg $_{CALC1}$ is at least 10.0°C;
   - the Tg $_{DSC}$ is from -65.0 °C to -55.0 °C, for winter or all season tyre or from -55.0 °C to - 40.0 °C for summer tyre,
   - the weight average molecular weight (Mw) is from 400,000 to 800,000 g/mol;
   - the number average molecular weight (Mn) is preferably from 200,000 to 500,000 g/mol;
   - the polydispersity index Mw/Mn from 1.30 to 2.00;
   - the modification rate is of at least 70%.

12. A cross-linkable elastomeric composition comprising at least:

   100 phr of one or more elastomeric polymer(s), of which at least 20 phr of at least a conjugated diene polymer (I) as defined in any one of claims 1 to 11,
   at least 10 phr of a reinforcing filler, and
   at least 0.1 phr of a vulcanizing agent.

13. The cross-linkable elastomeric composition of claim 12 comprising:

   - at least 30 phr or 40 phr, preferably at least 50 phr or 60 phr or 70 phr, more preferably at least 80 phr or 90 phr or more of at least a conjugated diene polymer (I),
   - from 10 phr to 150 phr, from 10 phr to 120 phr or from 10 phr to 90 phr of at least one reinforcing filler,
   - from 0.1 phr to 10 phr, from 0.2 phr to 10 phr, from 1 phr to 10 phr or from 1.5 phr to 5 phr of at least one vulcanizing agent.

14. The cross-linkable elastomeric composition of claim 13 for winter or all season use comprising:

   - 100 phr of one or more elastomeric polymer(s), of which at least 50 phr of the conjugated diene polymer (I), the conjugated diene polymer (I) having a Tg $_{DSC}$ from -72.0 °C to -40.0 °C, preferably from -65.0 °C to -55.0 °C,
   - at least 50 phr, preferably from 80 to 130 phr, of at least a reinforcing filler, preferably of silica,
   - at least 10 phr, preferably from 15 a 25 phr of a plasticizer, preferably of an oil,
   - optionally, at least 20 phr, preferably from 30 to 40 phr, of a resin,
   - optionally, at least 10 phr, preferably from 15 to 25 phr, of a liquid polymer,
   - at least 0.2 phr, preferably from 0.5 to 1.0 phr, of a vulcanizing agent, preferably sulphur,
   - at least 0.5 phr, preferably from 0.8 a 1.5 phr, of one or more vulcanization accelerators.

15. The cross-linkable elastomeric composition of claim 13 for summer use comprising:

   - 100 phr of one or more elastomeric polymer(s), of which at least 50 phr of a conjugated diene polymer (I), the conjugated diene polymer (I) having a Tg $_{DSC}$ from -55.0 °C to -20.0 °C, preferably from -55.0 °C to -40.0 °C,
   - at least 50 phr, preferably from 70 to 110 phr, of a reinforcing filler, preferably silica,
   - at least 10 phr, preferably from 15 a 20 phr, of a plasticizer, preferably oil,
   - optionally, at least 10 phr, preferably from 15 to 25 phr, of a resin,
   - optionally, at least 5 phr, preferably from 10 to 20 phr of a liquid polymer,
   - at least 0.5 phr, preferably from 1.0 to 2.0 phr of a vulcanizing agent, preferably sulphur,
   - at least 1 phr, preferably from 3 to 4 phr, of one or more vulcanization accelerators.

16. A tyre component comprising, preferably consisting of, a cross-linked elastomeric compound obtained by cross-linking a cross-linkable elastomeric composition according to any one of claims 12 to 15 wherein said component is selected from tread band, underlayer, anti-abrasive strip, sidewall, sidewall insert, mini-sidewall, liner, under-liner, rubber layers, bead filler, bead reinforcing layers (flipper), bead protection layers (chafer) and sheet.

17. A vehicle wheel tyre comprising at least a tyre component according to claim 16, wherein said tyre component is preferably a tread band.

18. The vehicle wheel tyre of any one of claims 1 to 11 or of claim 17 for winter, all season or summer use.

FIG.1

## FIG.2A

## FIG.2B

# FIG.3A

# FIG.3B

FIG.4

Europäisches
Patentamt

European
Patent Office

Office européen
des brevets

# EUROPEAN SEARCH REPORT

**Application Number**

EP 23 17 0341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP S63 75046 A (TOYO TIRE & RUBBER CO) 5 April 1988 (1988-04-05) * claim 1 * | 1-18 | INV. C08K3/36 B60C1/00 C08C19/22 |
| A | US 4 785 058 A (SAKASHITA TATSUO [JP] ET AL) 15 November 1988 (1988-11-15) * claims 1-3; tables 1-4 * | 1-8 | C08C19/24 C08F236/10 |
| A | CN 113 372 630 A (ASAHI CHEMICAL IND) 10 September 2021 (2021-09-10) * the whole document * | 1-8 | |

**TECHNICAL FIELDS SEARCHED (IPC)**

C08K
B60C
C08C
C08F

The present search report has been drawn up for all claims

| Place of search | Date of completion of the search | Examiner |
|---|---|---|
| Munich | 16 October 2023 | Höfler, Thomas |

EPO FORM 1503 03.82 (P04C01)

## ANNEX TO THE EUROPEAN SEARCH REPORT
## ON EUROPEAN PATENT APPLICATION NO.

EP 23 17 0341

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2023

| Patent document cited in search report | | Publication date | Patent family member(s) | | Publication date |
|---|---|---|---|---|---|
| JP S6375046 | A | 05-04-1988 | NONE | | |
| US 4785058 | A | 15-11-1988 | DE | 3217622 A1 | 23-12-1982 |
| | | | FR | 2505853 A1 | 19-11-1982 |
| | | | GB | 2102015 A | 26-01-1983 |
| | | | JP | S57187331 A | 18-11-1982 |
| | | | US | 4785058 A | 15-11-1988 |
| CN 113372630 | A | 10-09-2021 | CN | 113372630 A | 10-09-2021 |
| | | | JP | 2021143324 A | 24-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050203251 A1
- US 20090036567 A1
- JP 11189616 A
- EP 1457501 A1
- US 2019023880 A1
- US 2021284827 A1

- JP 2023072878 A
- WO 2018078480 A1
- WO 2016050887 A1
- WO 2016174629 A1
- WO 2016174628 A1

**Non-patent literature cited in the description**

- **I. M. KOLTHOFF et al.** *J. Polym. Sci.,* 1964, vol. 1, 429
- **GORDON, M. ; TAYLOR, J. S.** *J. Appl. Chem.,* 1952, vol. 2, 493

- **J. BRANDRUP et al.** Polymer Handbook. John Wiley & Sons, Inc, 1966, VI-75
- **R. R. HAMPTON.** *Analytical Chemistry,* 1949, vol. 21, 923